(19) Europäisches Patentamt / European Patent Office / Office européen des brevets

(11) **EP 4 020 315 A1**

(12) **EUROPEAN PATENT APPLICATION**
published in accordance with Art. 153(4) EPC

(43) Date of publication:
**29.06.2022 Bulletin 2022/26**

(21) Application number: **20861495.8**

(22) Date of filing: **01.09.2020**

(51) International Patent Classification (IPC):
***G06K 9/62*** (2022.01)

(52) Cooperative Patent Classification (CPC):
**G06K 9/62; G06N 20/00**

(86) International application number:
**PCT/CN2020/112878**

(87) International publication number:
**WO 2021/043140 (11.03.2021 Gazette 2021/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.09.2019 CN 201910824755**

(71) Applicant: **Huawei Technologies Co., Ltd.**
**Longgang District**
**Shenzhen,**
**Guangdong 518129 (CN)**

(72) Inventors:
• **ZHANG, Yanfang**
  **Shenzhen, Guangdong 518129 (CN)**
• **XUE, Li**
  **Shenzhen, Guangdong 518129 (CN)**
• **SUN, Xudong**
  **Shenzhen, Guangdong 518129 (CN)**
• **CHANG, Qinglong**
  **Shenzhen, Guangdong 518129 (CN)**
• **LUO, Lei**
  **Shenzhen, Guangdong 518129 (CN)**

(74) Representative: **Thun, Clemens et al**
**Mitscherlich PartmbB**
**Patent- und Rechtsanwälte**
**Sonnenstraße 33**
**80331 München (DE)**

(54) **METHOD, APPARATUS AND SYSTEM FOR DETERMINING LABEL**

(57) This application discloses a label determining method, apparatus, and system, and belongs to the AI field. The method includes: obtaining a target feature vector of a first time series, where a time series is a set of a group of data arranged in a time sequence; obtaining a similarity between the target feature vector and a reference feature vector in a reference feature vector set, where the reference feature vector is a feature vector of a second time series with a determined label; and when a similarity between the target feature vector and a first reference feature vector is greater than a similarity threshold, determining that a label corresponding to the first reference feature vector is a label of the first time series, where the first reference feature vector is a reference feature vector in the reference feature vector set. According to this application, label determining accuracy is improved. This application is used to determine a label for a machine learning model.

FIG. 3

EP 4 020 315 A1

**Description**

**TECHNICAL FIELD**

This application relates to the artificial intelligence (artificial intelligence, AI) field, and in particular, to a label determining method, apparatus, and system.

**BACKGROUND**

Machine learning means that a machine trains a machine learning model based on a training sample, so that the machine learning model has a capability (for example, a category prediction capability) of predicting data other than the training sample. As an important branch of the AI field, machine learning is widely applied to many fields. From a perspective of a learning method, machine learning algorithms may include several types of algorithms such as a supervised learning algorithm, an unsupervised learning algorithm, a semi-supervised learning algorithm, and a reinforcement learning algorithm. The supervised learning algorithm is a basic algorithm in the machine learning algorithms.

In a process in which the supervised learning algorithm is used to train the machine learning model, a large amount of sample data needs to be first manually annotated (for example, if a sample is a face image, an annotation process may be to annotate the face image with "wearing glasses"), and then the annotated sample data is used to train the machine learning model, to adjust a parameter used for the machine learning model. A trained machine learning model may be used to perform a corresponding function, for example, image recognition or language translation. A sample data annotation process is referred to as a label determining process. Annotation content is a label. The label is used to identify data, for example, to identify a category of the data.

However, when the supervised learning algorithm, the semi-supervised learning algorithm, or the like is used for model training, a large amount of manpower is required to annotate the sample data, and there are high label determining costs.

**SUMMARY**

Embodiments of this application provide a label determining method, apparatus, and system. A problem that label determining costs are high currently may be resolved. The technical solutions are as follows.

According to a first aspect, a label determining method is provided, and the method includes:

obtaining a target feature vector of a first time series, where a time series is a set of a group of data arranged in a time sequence;

obtaining a similarity between the target feature vector and a reference feature vector in a reference feature vector set, where the reference feature vector is a feature vector of a second time series with a determined label; and

when a similarity between the target feature vector and a first reference feature vector is greater than a similarity threshold, determining that a label corresponding to the first reference feature vector is a label of the first time series, where the first reference feature vector is a reference feature vector in the reference feature vector set.

According to the label determining method provided in this embodiment of this application, label migration is performed based on a similarity between feature vectors of time series, so that sample data can be automatically annotated, and label determining costs can be reduced. In addition, because similarity calculation is related to the feature vector of the time series, impact of interference information of the time series is avoided. For example, impact of interference information such as a sampling time period, an amplitude change, quadrant drift, and noise can be reduced. Label determining accuracy is improved. In particular, label migration can still be performed accurately for a high-dimensional time series.

In addition, the label determining method provided in this embodiment of this application is applied to a scenario in which a large amount of sample data needs to be annotated, for example, a supervised learning algorithm or a semi-supervised learning algorithm, so that annotation costs can be effectively reduced, and modeling efficiency of a machine learning model can be improved.

Optionally, the first time series is a time series of a network KPI.

Optionally, the reference feature vector includes data of one or more features, and the target feature vector includes data of one or more features; and the similarity between the target feature vector and the first reference feature vector is a similarity between a first feature vector and a second feature subvector, and the first feature subvector and the second feature subvector respectively consist of data in the target feature vector and data in the first reference feature vector that correspond to a same feature.

In this embodiment of this application, the reference feature vector included in the reference feature vector set and the target feature vector may be obtained based on a same extraction algorithm, or may be obtained based on different extraction algorithms. Correspondingly, each reference feature vector and the target feature vector may involve different categories of features and different quantities of features. Therefore, corresponding processing needs to be performed for different cases.

In a first case, the reference feature vector and the target feature vector involve different categories of features and different quantities of features. A similarity determining process includes: selecting a same first feature from a feature corresponding to the target feature vector and a feature corresponding to the first reference feature vector; obtaining data corresponding to the first feature in the target feature vector, to obtain a first feature subvector including the obtained data; obtaining data corresponding to the first feature in the first reference feature vector, to obtain a second feature subvector including the obtained data; and determining a similarity between the first feature subvector and the second feature subvector. The similarity between the first feature subvector and the second feature subvector is the similarity between the reference feature vector and the target feature vector.

In the first case, the first feature subvector and the second feature subvector are selected, and the similarity between the first feature subvector and the second feature subvector is calculated and used as the similarity between the reference feature vector and the target feature vector, so that a similarity calculation process can be simplified, and accuracy of the similarity finally obtained through calculation can be ensured.

In a second case, the reference feature vector and the target feature vector may involve a same category of feature and a same quantity of features. The reference feature vector and the target feature vector may be directly obtained and respectively used as a first feature subvector and a second feature subvector respectively. A similarity between the first feature subvector and the second feature subvector is obtained. The similarity between the first feature subvector and the second feature subvector is the similarity between the reference feature vector and the target feature vector.

In the second case, it is set that the reference feature vector and the target feature vector involve a same category of feature and a same quantity of features, so that a feature selection process can be reduced, and a similarity calculation process can be further simplified.

In the foregoing two cases, the first feature subvector and the second feature subvector each are represented in a sequence form, data on a same location in the first feature subvector and the second feature subvector corresponds to a same category of feature, and the similarity between the first feature subvector and the second feature subvector is negatively correlated to a distance between the first feature subvector and the second feature subvector.

Correspondingly, the distance between the first feature subvector and the second feature subvector may be obtained first. Then, the similarity between the first feature subvector and the second feature subvector is determined based on the obtained distance. For example, the distance may be calculated according to a Euclidean distance formula, a Chebyshev distance formula, a cosine distance formula, a Mahalanobis distance formula, another distance formula, or the like.

Because the distance between the first feature subvector and the second feature subvector can effectively reflect the similarity between the first feature subvector and the second feature subvector, the similarity can be quickly determined by calculating the distance, to improve similarity determining efficiency.

In this embodiment of this application, when there is a feature vector whose similarity to each reference feature vector in the reference feature vector set is not greater than the similarity threshold, a label further needs to be determined through manual annotation, to ensure that a feature vector whose label needs to be determined can be finally annotated with the corresponding label. In this embodiment of this application, based on different forms of time series sent by an analysis device to a management device, a manual annotation process may be divided into an individual annotation process (in this scenario, the analysis device usually sends one to-be-annotated time series to the management device each time) and a cluster annotation process (in this scenario, the analysis device usually sends one set of to-be-annotated time series to the management device each time). In this embodiment of this application, the manual annotation process is described in the following two optional manners:

In a first optional manner, the manual annotation process includes the following individual annotation process: sending the first time series to the management device when a similarity between the target feature vector and each reference feature vector in the reference feature vector set is not greater than the similarity threshold, so that the management device presents the first time series; and receiving, from the management device, a label of the first time series.

The label of the first time series can be annotated by a professional, so that the label of the first time series can still be determined when label migration cannot be performed for the first time series.

In a second optional manner, the manual annotation process includes the following cluster annotation process: obtaining a first feature vector set, where a similarity between any feature vector in the first feature vector set and each reference feature vector in the reference feature vector set is not greater than the similarity threshold, and a label of a time series corresponding to the any feature vector is not determined; sending, to the management device, a time series corresponding to the first feature vector set, so that the management device presents the time series corresponding to the first feature vector set; and receiving, from the management device, the label of the time series corresponding to the first feature vector set.

The label of the time series corresponding to the first feature vector set is annotated by a professional, so that the label of the time series corresponding to the first feature vector set can still be determined when label migration cannot be performed for the time series corresponding to the first feature vector set. In addition, labels of a plurality of time series may be annotated through one time of interaction with the management device, to reduce network overheads.

There may be a plurality of implementations in which the analysis device sends, to the management device, the time series corresponding to the first feature vector set. In this embodiment of this application, the following two implementations are used as examples for description.

In a first implementation, the analysis device sends, to the management device, the time series corresponding to the first feature vector set. After receiving the time series, the management device presents the time series corresponding to the first feature vector set, and the professional annotates the label of the time series corresponding to the first feature vector set.

In a second implementation, before sending, to the management device, the time series corresponding to the first feature vector set, the analysis device may further first perform clustering processing on feature vectors in the first feature vector set, to obtain a category relationship between the feature vectors in the first feature vector set; and send the category relationship to the management device when sending, to the management device, the time series corresponding to the first feature vector set, so that the management device presents, based on the category relationship, the time series corresponding to the first feature vector set.

For example, the management device may display, on a same user page, a plurality of time series that belong to a same category, and display, on different user pages, a plurality of time series that belong to different categories. For another example, the management device may display, on different locations on a same user page, a plurality of time series that belong to different categories. For still another example, the management device may correspondingly display each time series and a category to which the time series belongs. The management device presents, based on the category relationship, the time series corresponding to the first feature vector set, so that the professional can refer to the category relationship during annotation, to assist the professional in performing label annotation. Based on this, the professional may annotate, with a same label, time series that belong to a same category, to improve annotation efficiency and increase label annotation accuracy.

Optionally, the performing clustering processing on feature vectors in the first feature vector set includes:

collecting statistics about a neighboring vector of each feature vector based on a distance between every two feature vectors in the first feature vector set, where a neighboring vector of any feature vector in the first feature vector set is another feature vector whose distance from the any feature vector is less than a distance threshold and that is in the first feature vector set, and the distance threshold is a distance specified in a plurality of distances determined based on the first feature vector set; and

classifying, into a same category of feature vector based on a statistical result, every two feature vectors whose quantity of same neighboring vectors is greater than a quantity threshold, where for example, the quantity threshold is a quantity specified in a quantity of neighboring vectors of each feature vector in the first feature vector set.

Because the distance threshold and the quantity threshold are values that change relative to each other, a category relationship finally obtained through division based on the two thresholds is more accurate, better reflects a correlation between feature vectors, and improves adaptability of a clustering algorithm.

In this embodiment of this application, when a label of a time series corresponding to a feature vector is determined, the feature vector may be added to the reference feature vector set, and is used as a reference basis for label migration. However, labels corresponding to some feature vectors may be incorrect due to a manual error or a machine algorithm error. If these feature vectors are added to the reference feature vector set, a label conflict is likely to occur in a label migration process. For example, if there are a plurality of reference feature vectors whose similarity to a target feature vector of a time series is greater than the similarity threshold, and the plurality of reference feature vectors have different labels, label migration cannot be performed for the time series. Therefore, conflict detection processing needs to be performed on a feature vector to be added to the reference feature vector set, to avoid adding a feature vector with an incorrect label to the reference feature vector set. For example, a conflict detection process may include the following steps:

obtaining a first feature vector of a third time series with a determined label;
obtaining a similarity between the first feature vector and a reference feature vector in the reference feature vector set; and
when a similarity between the first feature vector and each reference feature vector in the reference feature vector set is not greater than a similarity threshold for storage, adding the first feature vector to the reference feature set by using the first feature vector as a reference feature vector.

Optionally, the method further includes:
when a similarity between the first feature vector and a second feature vector in the reference feature vector set is greater than the similarity threshold for storage, and a label corresponding to the first feature vector is the same as a label corresponding to the second feature vector, adding the first feature vector to the reference feature set by using the first feature vector as a reference feature vector.

Optionally, the method further includes:

when a similarity between the first feature vector and a second feature vector in the reference feature vector set is greater than the similarity threshold for storage, and a label corresponding to the first feature vector is different from a label corresponding to the second feature vector, sending, to the management device, a time series corresponding to the first feature vector and a time series corresponding to the second feature vector, so that the management device presents the time series corresponding to the first feature vector and the time series corresponding to the second feature vector;

receiving, from the management device, a same label that is of the time series corresponding to the first feature vector and the time series corresponding to the second feature vector;

updating, based on the received label, the prestored label of the time series corresponding to the first feature vector and the prestored label of the time series corresponding to the second feature vector; and

adding the first feature vector to the reference feature set by using the first feature vector as a reference feature vector.

Optionally, the target feature vector and the reference feature vector each include data of one or more of a statistical feature, a fitting feature, or a frequency domain feature.

Optionally, the label determining method provided in this embodiment of this application is applied to an abnormality detection scenario, to automatically determine a label. In this application scenario, the label determining method is executed by a network analyzer, and a label corresponding to the reference feature vector is an abnormality detection label. In the abnormality detection scenario, time series data includes a network key performance indicator (key performance indicator, KPI), and the network KPI includes network traffic KP, a network service KPI, and the like. A network device KPI may be central processing unit (CPU, central processing unit) utilization, optical power, or the like. The network service KPI may be network traffic, a packet loss rate, a latency, a quantity of accessed users, or the like. The network traffic KPI is periodic time series data. Because a large quantity of features with an abnormal KPI are similar, the label determining method provided in this embodiment of this application is applied to the abnormality detection scenario, to automatically migrate a label within a specific range, improve label utilization, and reduce annotation costs. In addition, in comparison with a conventional label migration method, accuracy of a determined label is high.

According to a second aspect, a label determining apparatus is provided. The apparatus includes a plurality of functional modules, and the plurality of functional modules interact with each other, to implement the method in the first aspect and the implementations of the first aspect. The plurality of functional modules may be implemented based on software, hardware, or a combination of software and hardware, and the plurality of functional modules may be randomly combined or divided based on a specific implementation.

According to a third aspect, a label determining apparatus is provided, including a processor and a memory.

The memory is configured to store a computer program, and the computer program includes program instructions.

The processor is configured to invoke the computer program to implement the label determining method according to any implementation of the first aspect.

According to a fourth aspect, a computer storage medium is provided. The computer storage medium stores instructions. When the instructions are executed by a processor, the label determining method according to any implementation of the first aspect is implemented.

According to a fifth aspect, a chip is provided. The chip includes a programmable logic circuit and/or a program instruction, and when the chip runs, the label determining method according to any implementation of the first aspect is implemented.

According to a sixth aspect, a computer program product is provided. The computer program product stores instructions, and when the instructions run on a computer, the computer is enabled to perform the label determining method according to any implementation of the first aspect.

The technical solutions provided in the embodiments of this application bring at least the following beneficial effects.

According to the label determining method provided in the embodiments of this application, label migration is performed based on a similarity between feature vectors of time series, so that sample data can be automatically annotated, and label determining costs can be reduced. In addition, because similarity calculation is related to the feature vector of the time series, impact of interference information of the time series is avoided. For example, impact of interference information such as a sampling time period, an amplitude change, quadrant drift, and noise can be reduced. Label determining accuracy is improved. In particular, label migration can still be performed accurately for a high-dimensional time series. The label determining method provided in the embodiments of this application is applied to a scenario in which a large amount of sample data needs to be annotated, for example, a supervised learning algorithm or a semi-supervised learning algorithm, so that annotation costs can be effectively reduced, and modeling efficiency of the machine learning model can be improved.

In addition, according to the label determining method provided in the embodiments of this application, because label migration is performed based on a similarity between feature vectors, a time series for which label migration is performed is not limited to time series with a similar waveform. Label migration can be performed provided that it is ensured that the time series are similar in some feature dimensions. It can be learned from this that the embodiments of this application may be applied to label migration to be performed for time series with different waveforms. Therefore, a label generalization scenario can be expanded, label migration flexibility and utilization can be improved, and modeling costs of the machine learning model can be reduced. Especially in the abnormality detection scenario, label migration between KPIs of some similar features can be implemented.

Further, the analysis device determines the category relationship by performing clustering on the first feature vector set, and the management device presents, based on the category relationship, the time series corresponding to the first feature vector set, so that the professional can refer to the category relationship during annotation, to assist the professional in performing label annotation. Based on this, the professional may annotate, with a same label, time series that belong to a same category, to improve annotation efficiency and increase label annotation accuracy.

## BRIEF DESCRIPTION OF DRAWINGS

FIG. 1 is a schematic diagram of an application scenario involved in a label determining method according to an embodiment of this application;

FIG. 2 is a schematic diagram of another application scenario involved in a label determining method according to an embodiment of this application;

FIG. 3 is a schematic flowchart of a label determining method according to an embodiment of this application;

FIG. 4 is a schematic flowchart of obtaining a similarity between a target feature vector and a reference feature vector in a reference feature vector set according to an embodiment of this application;

FIG. 5A and FIG. 5B are a flowchart of a conflict detection method according to an embodiment of this application;

FIG. 6 is a schematic flowchart of another label determining method according to an embodiment of this application;

FIG. 7 is a schematic flowchart of performing clustering processing on feature vectors in a first feature vector set according to an embodiment of this application;

FIG. 8 is a block diagram of a label determining apparatus according to an example embodiment of this application;

FIG. 9 is a block diagram of another label determining apparatus according to an example embodiment of this application;

FIG. 10 is a block diagram of still another label determining apparatus according to an example embodiment of this application;

FIG. 11 is a block diagram of yet another label determining apparatus according to an example embodiment of this application;

FIG. 12 is a block diagram of a label determining apparatus according to another example embodiment of this application;

FIG. 13 is a block diagram of another label determining apparatus according to another example embodiment of this application;

FIG. 14 is a block diagram of still another label determining apparatus according to another example embodiment of this application; and

FIG. 15 is a block diagram of a label determining apparatus according to still another example embodiment of this application.

## DESCRIPTION OF EMBODIMENTS

To make the objectives, technical solutions, and advantages of this application clearer, the following further describes implementations of this application in detail with reference to the accompanying drawings.

For ease of understanding by a reader, a machine learning algorithm involved in a provided label determining method is briefly described in the embodiments of this application.

As an important branch of the AI field, the machine learning algorithm is widely applied to many fields. From a perspective of a learning method, machine learning algorithms may include several types of algorithms such as a supervised learning algorithm, an unsupervised learning algorithm, a semi-supervised learning algorithm, and a reinforcement learning algorithm. In the supervised learning algorithm, an algorithm may be learned or a pattern may be built based on training data, and a new instance is deduced based on the algorithm or pattern. The training data is also referred to as sample data, and includes input data and an expected output. An expected output of a model of the machine learning algorithm is referred to as a label, and may be a continuous value (referred to as a regression or a regression label) or a predicted classification result (referred to as a classification label). A difference between the unsupervised learning algorithm and the supervised learning algorithm is that no label is preset for sample data of the unsupervised learning algorithm. The model of the machine learning algorithm analyzes a feature of data, to reach an achievement. Some sample data of the semi-supervised learning algorithm has a label, and the other sample data has no label. Data having no label is far more than data having a label. In the reinforcement learning algorithm, an attempt is continuously made in an environment to obtain a maximum expected benefit, and a reward or punishment is given in the environment, to generate a choice for a maximum benefit. The supervised learning algorithm is a basic algorithm in the machine learning algorithms. In a case of a plenty of data, a very good effect can be obtained, for example, image recognition and language translation. However, in the supervised learning algorithm, there are high label obtaining costs, and a large amount of manpower is required for sample annotation. In many application scenarios, there is no large amount of annotated data (to be specific, sample data annotated with a label).

As described above, when the supervised learning algorithm, the semi-supervised learning algorithm, or the like is used for model training, a large amount of manpower is required to annotate the sample data, and there are high label determining costs.

Currently, a label determining method is provided. In this method, a label is determined in a label migration (also referred to as label generalization) manner. To be specific, a label of a time series with a determined label is migrated to another time series similar to the time series, and is used as a label of the another time series. The time series is a set of a group of data arranged in a time sequence. The time sequence is usually a data generation sequence. The time series is a data form of sample data, and data in the time series is also referred to as a data point. For example, if a time series X is $X = (x_1, x_2, \cdots, x_n)$, the time series has n data points, the n data points are respectively $x_1$ to $x_n$, and a length of the time series is n.

It is assumed that a first time series is a time series with a to-be-determined label, and a label determining process includes: obtaining a waveform similarity between the first time series and a plurality of reference time series, and when a waveform similarity between the first time series and one of the plurality of reference time series is greater than a waveform similarity threshold, determining that a label corresponding to the reference time series is a label of the first time series. However, such a manner in which label migration is performed by comparing a waveform similarity between time series is easily affected by various interference information (for example, a sampling time period, an amplitude change, quadrant drift, and noise) of the time series, and label determining accuracy is low.

Further, currently, a dynamic time warping (dynamic time warping, DTW)-based label determining method is further provided. When the first time series and the reference time series have different lengths (to be specific, a quantity of data points in a sequence), a time axis is warped to establish a correspondence between two time series, and then a waveform similarity between the two time series is calculated, to reduce impact of the sampling time period, the amplitude change, and the quadrant drift to an extent. However, in the label determining method, an algorithm of warping the time axis is complex, and impact of noise of a time series still cannot be avoided. In particular, utility is low for a high-dimensional time series.

An embodiment of this application provides a label determining method, to perform label migration based on a similarity between feature vectors of time series, so that calculation of the similarity is correlated to the feature vectors of the time series, to avoid impact of interference information of the time series, and improve label determining accuracy. In particular, label migration can still be performed accurately for a high-dimensional time series.

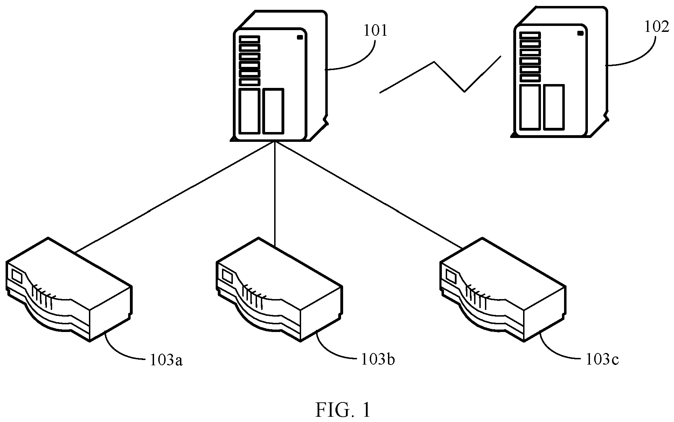

FIG. 1 is a schematic diagram of an application scenario involved in a label determining method according to an embodiment of this application. As shown in FIG. 1, the application scenario includes an analysis device 101, a management device 102, and network devices 103a to 103c (collectively referred to as a network device 103). A quantity of analysis devices, a quantity of management devices, and a quantity of network devices in FIG. 1 are merely used as an example, and are not intended to limit the application scenario involved in the label determining method provided in this embodiment of this application. A network involved in this application scenario may be a 2nd generation (2nd generation, 2G) communications network, a 3rd generation (3rd generation, 3G) communications network, a Long-Term Evolution (LongTerm Evolution, LTE) communications network, a 5th generation (5rd generation, 5G) communications network, or the like.

The analysis device 101, the management device 102, and the network device 103 may be deployed on a same device, or may be separately deployed on different devices. For example, when the analysis device 101, the management device 102, and the network device 103 are deployed on different devices, the analysis device 101 may be a server, a server cluster including several servers, or a cloud computing service center. The management device 102 may be a computer, a server, a server cluster including several servers, or a cloud computing service center, and the management device 102 may be an operations support system (operations support system, OSS) or another network device connected to the analysis device. The network device 103 may be a router, a switch, a base station, or the like. The network device 103 may be a network device in a core network, or may be a network device in an edge network. The analysis device 101 is separately connected to the network device 103 and the management device 102 through a wired network or a wireless network.

The network device 103 is configured to upload collected data, for example, data of various types of time series, to the analysis device 101, the analysis device 101 is configured to extract and use data from the network device 103, for example, determine a label of an obtained time series, and the management device 103 is configured to manage the analysis device 101. Optionally, the data uploaded by the network device 103 to the analysis device 101 may further include various types of log data, device status data, and the like. The analysis device 101 is further configured to train one or more machine learning models. Different machine learning models may separately implement functions such as abnormality detection, prediction, network security protection, and application identification based on the data uploaded by the network device 103. The analysis device may further implement feature selection and automatic updating of each machine learning model, and feed back a selected feature and an updating result of the model to the management device 102, and the management device 102 determines whether to retrain the model. For different machine learning models, the analysis device 101 may determine different labels in the label determining method provided in this application.

Optionally, the foregoing application scenario may alternatively not include the network device 103, and the analysis device 101 may further receive data that is of a time series and that is input by the management device 103. In this embodiment of this application, a source of the data of the time series is merely schematically described, but is not limited.

Further, the label determining method provided in this embodiment of this application may be applied to an abnormality detection scenario. Abnormality detection is to detect a pattern, data, or a time that does not conform to a prediction. During conventional abnormality detection, a professional (also referred to as an expert) learns of historical data and then finds out an abnormality, in other words, annotates abnormal data with a label "abnormal". Sources of data on which abnormality detection is performed include an application, a process, an operating system, a device, or a network. As complexity of a computing system increases, a current abnormality detection difficulty cannot be resolved manually.

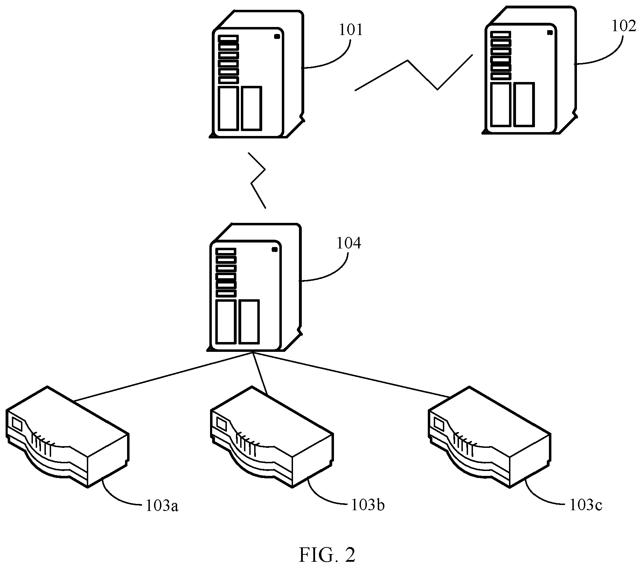

The label determining method provided in this embodiment of this application is applied to an abnormality detection scenario, to automatically determine a label. FIG. 2 is a schematic diagram of an abnormality detection application scenario involved in a label determining method according to an embodiment of this application. In this application scenario, the analysis device 101 may be a network analyzer, the management device 102 may be a controller, a machine learning model maintained by the analysis device 101 is an abnormality detection model, and a determined label is an abnormality detection label. The abnormality detection label includes two types of labels, and the two types of labels are respectively "normal" and "abnormal". Based on the scenario shown in FIG. 1, the application scenario may further include a storage device 104. The storage device 104 is configured to store data provided by the network device 103. The storage device 104 may be a distributed storage device, and the analysis device 101 may read and write data stored in the storage device 104. In this case, when the network device 103 has a large amount of data, the storage device 104 stores the data, so that load of the analysis device 101 can be reduced, and data analysis efficiency of the analysis device 101 can be improved. It should be noted that, when the network device 103 provides a small amount of data, the storage device 104 may alternatively not be disposed. In this case, for the abnormality detection application scenario, refer to the application scenario shown in FIG. 1.

In the abnormality detection scenario, abnormality detection performed on a time series is usually to find a data point far away from a relative established pattern or distribution. Abnormalities of the time series include a sudden rise, a sudden fall, an average change, and the like. Abnormality detection algorithms of the time series include a statistics and data distribution-based algorithm (for example, an N-Sigma algorithm), a distance/density-based algorithm (for example, a local abnormality factor algorithm), an isolation forest algorithm, or a prediction-based algorithm (for example, an autoregressive integrated moving average model (autoregressive integrated moving average model, ARIMA) algorithm), and the like. Corresponding machine learning models may be a statistics and data distribution-based model (for example, an N-Sigma model), a distance/density-based model (for example, a local abnormality factor model), an isolation forest model, or a prediction-based model (for example, an ARIMA).

As shown in FIG. 1 and FIG. 2, the data uploaded by the network device 103 includes data of various types of time series, and is characterized by a large data volume, a complex pattern, and a complex rule. Therefore, a large quantity of machine learning models are used when the data is used for applications such as abnormality detection, prediction, classification, network security protection, application identification, or user experience evaluation (for example, evaluating user experience based on the data). The professional needs to annotate the data, and there is a very huge workload and very high costs.

This embodiment of this application provides a label determining method, to perform label migration, thereby reducing annotation costs. In addition, because label migration is performed based on a similarity between feature vectors of time series, calculation of the similarity is related to the feature vectors of time series, to avoid impact of interference information of the time series, and improve label determining accuracy.

In the abnormality detection scenario, time series data includes a network key performance indicator (key performance indicator, KPI), and the network KPI includes a network device KPI, a network service KPI, and the like. The network device KPI may be central processing unit (CPU, central processing unit) utilization, optical power, or the like. The network service KPI may be network traffic, a packet loss rate, a latency, a quantity of accessed users, or the like. The network traffic KPI is periodic time series data. For example, in the abnormality detection scenario shown in FIG. 2, a machine learning model is used to perform abnormality detection on the network traffic KPI. Because a large quantity of features with an abnormal KPI are similar, the label determining method provided in this embodiment of this application is applied to the abnormality detection scenario, to automatically migrate a label within a specific range, improve label utilization, and reduce annotation costs. In addition, in comparison with a conventional label migration method, accuracy of a determined label is high.

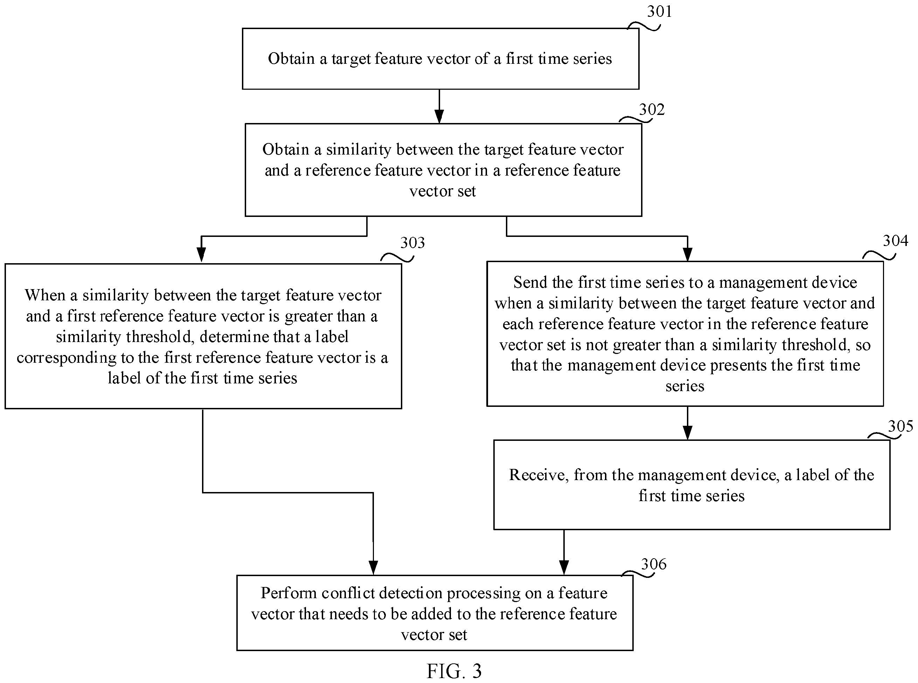

An embodiment of this application provides a label determining method. The method may be performed by the foregoing analysis device. It is assumed that a first time series is a series whose label needs to be determined. As shown in FIG. 3, the method includes the following steps.

Step 301: Obtain a target feature vector of a first time series.

A time series is a set of a group of data arranged in a time sequence. The time sequence is usually a data generation sequence, and data in the time series is also referred to as a data point. Usually, a time interval between data points in a time series is a constant value. Therefore, the time series may be used as discrete time data for analysis and processing. For example, the first time series may be a time series of a network KPI.

In an optional example, the analysis device may receive a time series sent by a network device or a management device. In another optional example, the analysis device has an input/output (I/O) interface, and receives the time series through the I/O interface. In still another optional example, the analysis device may read a time series from a storage device.

The target feature vector is a vector representing a feature of the first time series, and includes data of one or more features. In other words, the target feature vector corresponds to one-dimensional or multi-dimensional features, a dimension of a feature corresponding to the target feature vector is the same as an amount of data in the target feature vector (in other words, the feature is in a one-to-one correspondence with the data). The feature is the feature of the first time series, and may include a data feature and/or an extraction feature.

The data feature is a feature of the data in the time series. For example, the data feature includes a data arrangement period, a data change trend, data fluctuation, or the like. Correspondingly, data of the data feature includes data of the data arrangement period, data of the data change trend, data of data fluctuation, or the like. The data arrangement period is a period of arranging the data in the time series if the data in the time series is arranged periodically. For example, the data of the data arrangement period includes period duration (to be specific, a time interval between two periods) and/or a quantity of periods. The data of the data change trend is used to reflect a change trend (namely, the data change trend) of arranging the data in the time series. For example, the data includes a continuous growth trend, a continuous decline trend, a rise-fall trend, a fall-rise trend, or a trend satisfying normal distribution, or the like. The data of data fluctuation is used to reflect a fluctuation state (namely, data fluctuation) of the data in the time series. For example, the data includes a function representing a fluctuation curve of the time series, or a specified value of the time series, for example, a maximum value, a minimum value, or an average.

The extraction feature is a feature existing in a process of extracting the data in the time series. For example, the extraction feature includes a statistical feature, a fitting feature, a frequency domain feature, or the like. Correspondingly, data of the extraction feature includes data of the statistical feature, data of the fitting feature, data of the frequency domain feature, or the like. The statistical feature is a statistical feature of the time series. The statistical feature includes a quantity feature and an attribute feature. The quantity feature further includes a measurement feature and a count feature. The quantity feature may be directly represented by using a numerical value. For example, a consumption value of a plurality of resources such as a CPU, a memory, and an I/O resource is used as a measurement feature. A quantity of abnormalities and a quantity of devices that normally work are count features. The attribute feature cannot be directly represented by using a numerical value. For example, the attribute feature may be represented as whether a device is abnormal or whether a device breaks down. A feature in the statistical feature is an indicator that needs to be checked during statistics collection. For example, the data of the statistical feature includes a moving average (moving_average), a weighted average (weighted_mv), or the like. The fitting feature is a feature obtained during fitting of the time series, and data of the fitting feature is used to reflect a feature that is of the time series and that is used for fitting. For example, the data of the fitting feature includes an algorithm such as an ARIMA used during fitting. The frequency domain feature is a feature of the time series in frequency domain, and the frequency domain feature is used to reflect the feature of the time series in frequency domain. For example, data of the frequency domain feature includes data of a law followed by distribution of the time series in frequency domain, for example, a proportion of a high frequency component in the time series. Optionally, the data of the frequency domain feature may be obtained by performing wavelet decomposition on the time series.

A process of obtaining the target feature vector of the first time series may include: first determining a target feature that needs to be extracted, and then extracting data of the determined target feature from the first time series, to obtain the target feature vector. For example, the target feature that needs to be extracted is determined based on an application scenario involved in the label determining method. In an optional example, the target feature is a preconfigured feature, for example, a feature configured by a user.

In another optional example, the target feature is one or more specified features. For example, the specified feature is the foregoing statistical feature.

It should be noted that, the user may preset the specified feature. However, the first time series may not have all specified features, and the analysis device may select, as the target feature from the first time series, a feature belonging to the specified feature. For example, the target feature includes one or more of statistical features such as a time series decomposition_seasonal (time series decomposition_seasonal, Tsd seasonal) component, a moving average, a weighted average, a time series classification, a maximum value, a minimum value, a quantile, a variance, a standard deviation, period year-on-year (year-on-year, yoy, which is a historical period comparison), daily volatility, binned entropy, sample entropy, a moving average, an exponential moving average, a Gaussian distribution feature, or a T distribution feature, and correspondingly, data of the target feature includes data of the one or more statistical features; and/or

the target feature includes one or more of fitting features: an autoregressive fitting error, a Gaussian process regression fitting error, or a neural network fitting error, and correspondingly, data of the target feature includes data of the one or more fitting features; and/or

the target feature includes a frequency domain feature: a proportion of a high frequency component in the time series, and correspondingly, data of the target feature includes data of the proportion of the high frequency component in the time series, and the data may be obtained by performing wavelet decomposition on the time series.

Step 302: Obtain a similarity between the target feature vector and a reference feature vector in a reference feature vector set. Step 303 or 304 is performed.

The reference feature vector set is pre-established in the analysis device. The reference feature vector set includes one or more reference feature vectors, and the reference feature vector is a feature vector of a second time series with a determined label. The label may be manually annotated, may be determined in the label determining method provided in this embodiment of this application, or may be determined according to another algorithm. This is not limited in this embodiment of this application.

A label and a second time series that correspond to each reference feature vector in the reference feature vector set may be stored in the reference feature vector set, or may be stored in other storage space, provided that the corresponding label and second time series may be obtained through querying based on the reference feature vector.

The reference feature vector is a vector representing a feature of the second time series, and includes data of one or more features. In other words, the reference feature vector corresponds to one-dimensional or multi-dimensional features. A feature involved in the reference feature vector may include a data feature and/or an extraction feature. For explanations of a quantity of dimensions and features of data and a corresponding feature vector, refer to explanations of the foregoing target feature vectors. For a process of obtaining a reference feature vector of each second time series, refer to the foregoing process of obtaining the target feature vector of the first time series. Details are not described in this embodiment of this application.

Table 1 shows a schematic description of data stored in a reference feature vector set. In Table 1, a time series and a label that correspond to each reference feature vector in the reference feature vector set may be stored in the reference feature vector set. A sample data identifier (identificationID) in Table 1 is a reference feature vector of KPI_1, and includes data of four features. The four features of the data are a moving average (moving_average), a weighted average (weighted mv), a time series decomposition_seasonal (time series decomposition_seasonal, Tsd_seasonal) component, and period yoy. A time series corresponding to the reference feature vector is (x1, x2, ..., xn), and a corresponding label is "abnormal". In Table 1, it is assumed that the reference feature vector set stores data in a fixed format, and a feature of a reference feature vector stored in the reference feature vector set may alternatively be a preset feature. The data in the reference feature vector set may be stored in the format in Table 1. In an actual implementation of this embodiment of this application, the reference feature vector set may alternatively have another form. This is not limited in this embodiment of this application.

Table 1

| Sample data ID | Time sequence | Feature description 1 | Feature description 2 | Feature description 3 | Feature description 4 | Label Description |
|---|---|---|---|---|---|---|
| KPI_1 | (x1, x2, ..., xn) | Moving_ average | Weighted_mv | Tsd_seasonal | Period yoy | Abnormal |

In this embodiment of this application, the reference feature vector included in the reference feature vector set and the target feature vector may be obtained based on a same extraction algorithm, or may be obtained based on different extraction algorithms. Correspondingly, each reference feature vector and the target feature vector may involve different categories of features and different quantities of features. Therefore, corresponding processing needs to be performed for different cases.

It is assumed that a first reference feature vector is a reference feature vector in the reference feature vector set, and a first feature is a same feature in a feature corresponding to the target feature vector and a feature corresponding to the first reference feature vector. In other words, the first feature is an intersection between the feature corresponding to the target feature vector and the feature corresponding to the first reference feature vector. A first feature subvector is a vector including data corresponding to the first feature in the target feature vector, and a second feature subvector is a vector including data corresponding to the first feature in the first reference feature vector. Therefore, the similarity between the target feature vector and the first reference feature vector is a similarity between the first feature subvector and the second feature subvector. In this embodiment of this application, the following two cases are used as examples for description.

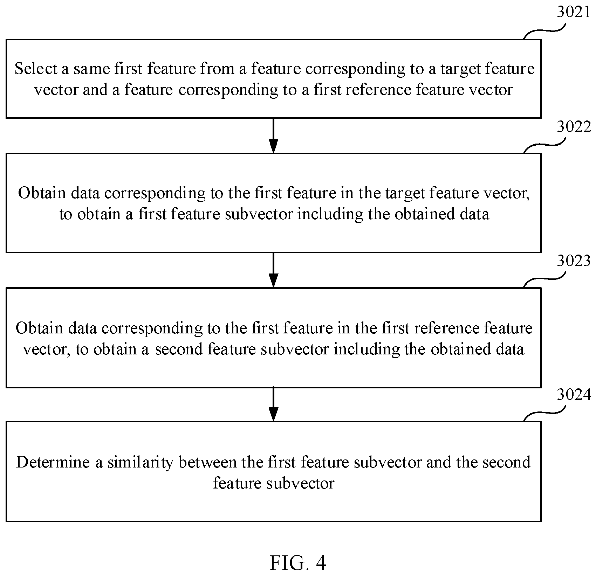

In a first case, the reference feature vector and the target feature vector involve different categories of features and different quantities of features. Therefore, as shown in FIG. 4, a process of obtaining the similarity between the target feature vector and the reference feature vector in the reference feature vector set may include the following steps.

Step 3021: Select a same first feature from the feature corresponding to the target feature vector and the feature corresponding to the first reference feature vector.

The first feature includes one or more features. The foregoing process of obtaining the first feature in step 3021 may be implemented by obtaining the intersection between the feature corresponding to the target feature vector and the feature corresponding to the first reference feature vector. For example, it is assumed that the target feature vector Q1 includes data corresponding to a total of four features: features $y_1$ to $y_4$, the four pieces of data are respectively $q_1$ to $q_4$, that is, $Q1=(q_1,q_2,q_3,q_4)$, and a set Y1 of the corresponding features meets a condition $Y1 = (y_1, y_2, y_3, y_4)$ ; the first reference feature vector Q2 includes data corresponding to a total of three features $y_1$, $y_4$, and $y_5$, the three pieces of data are respectively $p_1$, $p_4$, and $p_5$, that is, $Q2 = (p_1, p_4, p_5)$, and a set Y2 of the corresponding features meets a condition $Y2 = (y_1, y_4, y_5)$. Therefore, the first feature Y meets a condition $Y = Y1 \cap Y2$. Therefore, $Y = (y_1, y_4)$.

It should be noted that, the first feature may alternatively be obtained in another manner. For example, the feature corresponding to the target feature vector is sequentially compared with the feature corresponding to the first reference feature vector. This is not limited in this embodiment of this application.

Step 3022: Obtain the data corresponding to the first feature in the target feature vector, to obtain the first feature subvector including the obtained data.

The example in step 3021 is still used as an example. Therefore, the first feature subvector is $Q11 = (q_1,q_4)$ in the target feature vector $Q_1=(q_1,q_2,q_3,q_4)$.

Step 3023: Obtain the data corresponding to the first feature in the first reference feature vector, to obtain the second feature subvector including the obtained data.

The example in step 3021 is still used as an example. Therefore, the second feature subvector is $Q21 = (p_1, p_4)$ in the first reference feature vector $Q2 = (p_1, p_4, p_5)$. It should be noted that an amount and an arrangement manner of the data in the first feature subvector are the same as those of the data in the second feature subvector, to ensure accuracy of subsequent similarity calculation.

Step 3024: Determine the similarity between the first feature subvector and the second feature subvector.

In this embodiment of this application, the first feature subvector and the second feature subvector each are represented in a sequence form, data on a same location in the first feature subvector and the second feature subvector corresponds to a same category of feature, and the similarity between the first feature subvector and the second feature subvector may be measured based on a distance between the first feature subvector and the second feature subvector. The similarity is negatively correlated to the distance between the first feature subvector and the second feature subvector. In other words, a greater similarity between the two feature subvectors corresponds to a smaller distance, and a smaller similarity corresponds to a greater distance.

Therefore, the distance between the first feature subvector and the second feature subvector may be obtained first. Then, the similarity between the first feature subvector and the second feature subvector is determined based on the obtained distance.

Optionally, the distance between the first feature subvector and the second feature subvector is used to represent a distance between the target feature vector and the first reference feature vector, and the distance between the first feature subvector and the second feature subvector may be obtained in a plurality of manners, for example, is calculated according to a Euclidean distance formula, a Chebyshev distance formula, a cosine distance formula, a Mahalanobis distance formula, or another distance formula.

For example, it is assumed that the first feature subvector is $x = (f_{x1}, f_{x2}, \cdots, f_{xn})$, the second feature subvector is $y = (f_{y1}, f_{y2}, \cdots, f_{yn})$, and the distance between the first feature subvector and the second feature subvector is calculated according to the Mahalanobis distance formula $D_M(x, y)$ $D_M(x, y)$. The Mahalanobis distance formula is as follows:

$$D_M(x, y) = \sqrt{(x-y)\Sigma^{-1}(x-y)}$$ .

Herein, $\Sigma^{-1}$ is a covariance matrix, and $\Sigma^{-1} = E[(X - E[X])(X - E(X))^T]$. The covariance matrix $\Sigma^{-1}$ is a predetermined matrix, and may be obtained through calculation based on the first feature subvector and data of a feature that is in the reference feature vector set and that is of a same dimension as the first feature subvector.

In this embodiment of this application, the similarity between the first feature subvector and the second feature subvector is negatively correlated to the distance between the first feature subvector and the second feature subvector. In this case, the similarity S between the first feature subvector and the second feature subvector may be determined based on the obtained distance D and a similarity calculation formula. In an optional manner, the similarity calculation formula is: S = a/D. Herein, a is a preset value. For example, a = 1. In another optional manner, the similarity calculation formula is: S = 1 - f(D). Herein, f(D) indicates that normalization processing is performed on the distance D.

In a second case, the reference feature vector and the target feature vector may involve a same category of feature and a same quantity of features. Therefore, the first feature subvector is the same as the target feature vector, the second feature subvector is the same as the first reference feature vector, and the selection action in step 3021 does not need to be performed. A process of obtaining the similarity between the target feature vector and the reference feature vector in the reference feature vector set may be: directly determining the similarity between the target feature vector and the first reference feature vector, in other words, first obtaining the distance between the target feature vector and the first reference feature vector; and then determining the similarity between the target feature vector and the first reference feature vector based on the obtained distance. For a process of determining the similarity between the target feature vector and the first reference feature vector, refer to step 3024. Details are not described again in this embodiment of this application.

It should be noted that, the reference feature vector and the target feature vector involve data of a plurality of features, and a larger amount of data of a same feature provides a higher probability that the similarity finally obtained through calculation reflects a correlation between the reference feature vector and the target feature vector from a plurality of perspectives. A label determined based on this is more accurate.

Step 303: When the similarity between the target feature vector and the first reference feature vector is greater than a similarity threshold, determine that a label corresponding to the first reference feature vector is a label of the first time series.

The similarity threshold may be preset by the user, or may be determined by the analysis device based on a current application scenario. When the similarity between the target feature vector and the first reference feature vector is greater than the similarity threshold, it indicates that the similarity between the first time series and the second time series corresponding to the first reference feature vector is high, and the first time series meets a label migration condition. It may be determined that the label corresponding to the first reference feature vector is the label of the first time series.

For example, if the label corresponding to the first reference feature vector is "abnormal", the label of the first time series is also "abnormal".

Step 304: Send the first time series to the management device when a similarity between the target feature vector and each reference feature vector in the reference feature vector set is not greater than the similarity threshold, so that the management device presents the first time series.

When the similarity between the target feature vector and each reference feature vector in the reference feature vector set is not greater than the similarity threshold, it indicates that the first time series has a low similarity to each second time series corresponding to each reference feature vector in the reference feature vector set, and the first time series does not meet a label migration condition. Therefore, the label of the first time series corresponding to the target feature vector may be manually annotated. Therefore, the analysis device may send the first time series to the management device, and the management device may be the management device 102 in the foregoing application environment. After receiving the first time series, the management device presents the first time series, and a professional annotates the label of the first time series.

Step 305: Receive, from the management device, a label of the first time series.

Referring to step 304, after the professional annotates the label of the first time series, the management device receives the annotated label, and sends the label to the analysis device. The analysis device receives the label, and correspondingly stores the label and the first time series.

It should be noted that, when the similarity between the target feature vector and each reference feature vector in the reference feature vector set is not greater than the similarity threshold, if importance of the first time series is less than a preset threshold, for example, the first time series is a randomly obtained time series, because automatic label determining cannot be performed, the analysis device may alternatively not annotate the label of the first time series, in other words, does not perform steps 304 and 305, may delete the first time series, may obtain a new time series and use the new time series as the first time series, and perform steps 301 to 303 again, to determine a label of a time series that meets the label migration condition. In this way, the label of the time series that meets the label migration condition can be determined without a need for manual intervention.

Step 306: Perform conflict detection processing on a feature vector that needs to be added to the reference feature vector set.

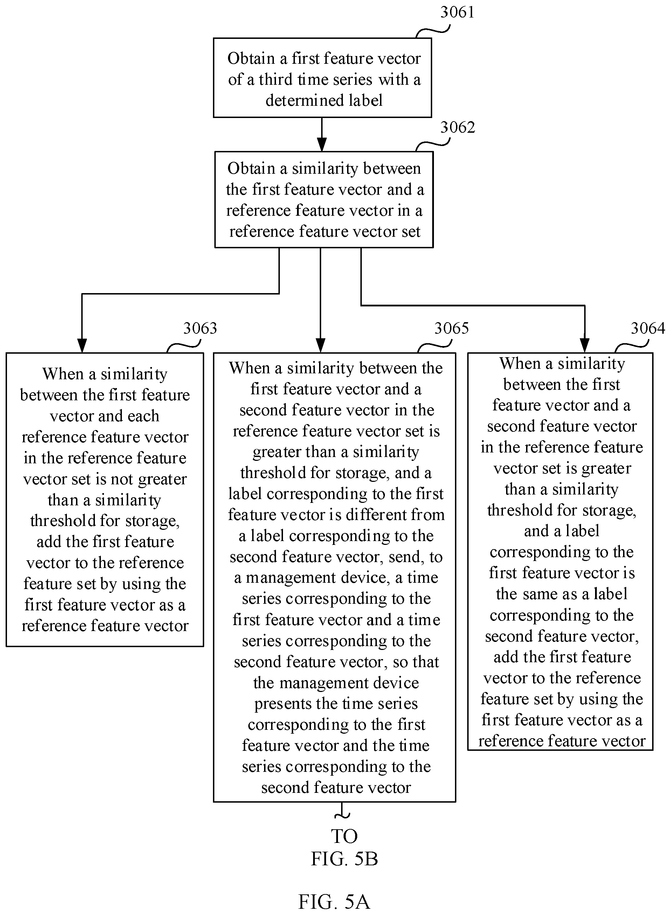

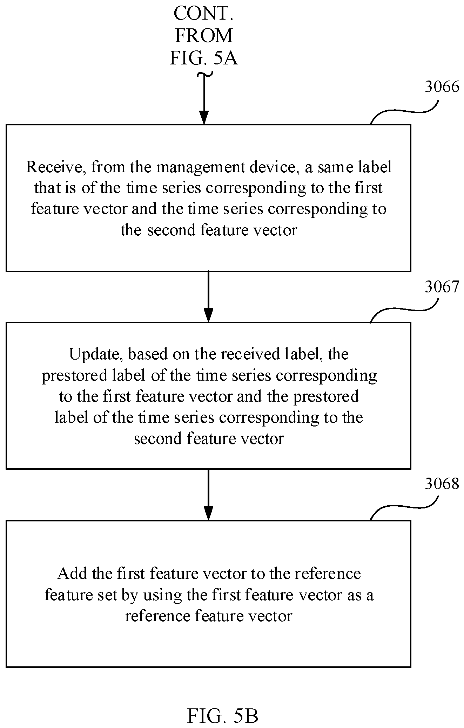

In this embodiment of this application, when a label of a time series corresponding to a feature vector is determined, the feature vector may be added to the reference feature vector set, and is used as a reference basis for label migration. However, labels corresponding to some feature vectors may be incorrect due to a manual error or a machine algorithm error. If these feature vectors are added to the reference feature vector set, a label conflict is likely to occur in a label migration process. For example, if there are a plurality of reference feature vectors whose similarity to a target feature vector of a time series is greater than the similarity threshold, and the plurality of reference feature vectors have different labels, label migration cannot be performed for the time series. Therefore, conflict detection processing needs to be performed on a feature vector to be added to the reference feature vector set, to avoid adding a feature vector with an incorrect label to the reference feature vector set. For example, as shown in FIG. 5A and FIG. 5B, a conflict detection process may include the following steps.

Step 3061: Obtain a first feature vector of a third time series with a determined label.

The label of the third time series may be manually annotated, may be determined in the label determining method provided in this embodiment of this application, or may be determined based on another algorithm. For example, the label of the third time series may be the label determined in step 303 or step 305. Correspondingly, the third time series is the first time series.

For a process of obtaining the first feature vector of the third time series, refer to the process of obtaining the target feature vector of the first time series in step 301. Details are not described again in this embodiment of this application. It should be noted that, when the third time series is the first time series, the target feature vector may be directly used as the first feature vector, to reduce a process of extracting a feature vector again, and reduce operation costs.

Step 3062: Obtain a similarity between the first feature vector and a reference feature vector in the reference feature vector set.

For step 3062, refer to step 302. Details are not described again in this embodiment of this application.

In the reference feature set, one or more reference feature vectors may correspond to a same label. However, the following error scenario easily occurs: A plurality of reference feature vectors that are substantially related correspond to different labels due to a manual error or a machine algorithm error. In other words, reference feature vectors that need to correspond to a same label correspond to different labels. To reduce occurrence of such an error scenario, after step 3062, step 3063, step 3064, or step 3065 may be performed.

Step 3063: When a similarity between the first feature vector and each reference feature vector in the reference feature vector set is not greater than a similarity threshold for storage, add the first feature vector to the reference feature set by using the first feature vector as a reference feature vector.

When the similarity between the first feature vector and each reference feature vector in the reference feature vector set is not greater than the similarity threshold for storage, it indicates that the first feature vector is dissimilar to each reference feature vector in the reference feature vector set. Correspondingly, the third time series has a low similarity to the second time series corresponding to each reference feature vector in the reference feature vector set, the third time series is a new time series, and the first feature vector may be used as a reference feature vector and added to the reference feature set.

It should be noted that, the similarity threshold for storage may be preset by the user, or may be determined by the analysis device based on a current application scenario. The similarity threshold for storage may be the same as or different from the similarity threshold in step 303.

Step 3064: When a similarity between the first feature vector and a second feature vector in the reference feature vector set is greater than a similarity threshold for storage, and a label corresponding to the first feature vector is the same as a label corresponding to the second feature vector, add the first feature vector to the reference feature set by using the first feature vector as a reference feature vector.

When the similarity between the first feature vector and the second feature vector in the reference feature vector set is greater than the similarity threshold for storage, it indicates that the first feature vector and the second feature vector are similar and related. When the label corresponding to the first feature vector is the same as the label corresponding to the second feature vector, it indicates that the two related feature vectors correspond to a same label. Therefore, the first feature vector meets a condition of adding a feature vector to the reference feature vector set, and the first feature vector is used as a reference feature vector and added to the reference feature set.

Step 3065: When a similarity between the first feature vector and a second feature vector in the reference feature vector set is greater than a similarity threshold for storage, and a label corresponding to the first feature vector is different from a label corresponding to the second feature vector, send, to the management device, a time series corresponding to the first feature vector and a time series corresponding to the second feature vector, so that the management device presents the time series corresponding to the first feature vector and the time series corresponding to the second feature vector. Step 3066 is performed.

When the similarity between the first feature vector and the second feature vector in the reference feature vector set is greater than the similarity threshold for storage, it indicates that the first feature vector and the second feature vector are similar and related. When a label corresponding to the first feature vector is different from a label corresponding to the second feature vector, it indicates that the two related feature vectors correspond to different labels. Therefore, the label of the first feature vector or the label of the second feature vector is incorrect. The label of the first feature vector or the label of the second feature vector may be manually annotated again, to ensure accuracy of the label. Therefore, the analysis device may send, to the management device, the time series corresponding to the first feature vector and the time series corresponding to the second feature vector. The management device may be the management device 102 in the foregoing application environment. After receiving the time series corresponding to the first feature vector and the time series corresponding to the second feature vector, the management device presents the received time series, and the professional annotates the labels of the presented time series. Because the feature vectors corresponding to the two time series are related, the manually annotated labels of the two time series are a same label.

It should be noted that, the analysis device may further send, to the management device, the label corresponding to the first feature vector and the label corresponding to the second feature vector, and when presenting the received time series, the management device may synchronously present the received labels for reference by the professional, to improve accuracy of final label annotation to an extent.

Step 3066: Receive, from the management device, a same label that is of the time series corresponding to the first feature vector and the time series corresponding to the second feature vector. Step 3067 is performed.

After the professional annotates the label of the presented time series, the management device receives the annotated label, and sends the label to the analysis device, and the analysis device receives the label.

Step 3067: Update, based on the received label, the prestored label of the time series corresponding to the first feature vector and the prestored label of the time series corresponding to the second feature vector. Step 3068 is performed.

Referring to step 3065, because the prestored label of the time series corresponding to the first feature vector and the prestored label of the time series corresponding to the second feature vector are different, the analysis device may update, based on the received label, the prestored label of the time series corresponding to the first feature vector and the prestored label of the time series corresponding to the second feature vector, to ensure that the updated label of the time series corresponding to the first feature vector and the updated label of the time series corresponding to the second feature vector are the same. Therefore, a label conflict is avoided.

Step 3068: Add the first feature vector to the reference feature set by using the first feature vector as a reference feature vector.

It should be noted that, steps 3061 to 3068 merely describe an example implementation of conflict detection. In an actual implementation of this embodiment of this application, conflict detection may alternatively be performed in another manner. For example, when the similarity between the first feature vector and the second feature vector in the reference feature vector set is greater than the similarity threshold for storage, and the label corresponding to the first feature vector is different from the label corresponding to the second feature vector, conflict detection may alternatively be manually performed by the professional. Steps 3065 to 3068 may alternatively be replaced by the following: presenting the first feature vector and the corresponding time series and label by using the analysis device or the management device; presenting the second feature vector and the label of the corresponding time series; receiving deletion instructions, where the deletion instructions instruct to delete the first feature vector and the corresponding time series and label, or the deletion instructions instruct to delete the second feature vector and the label of the corresponding time series; and deleting a feature vector indicated by the deletion instructions and a corresponding time series and label. If the analysis device receives the deletion instructions, it indicates that the feature vector that the deletion instructions instruct to delete cannot perform an effective reference function in a label migration process. The feature vector is deleted, so that a label conflict in the label migration process can be avoided.

Step 306 is described by using an example in which conflict detection processing is performed when the first feature vector is to be added to the reference feature vector set. In an actual implementation of this embodiment of this application, conflict detection processing may alternatively be periodically performed, or conflict detection processing is performed after a detection triggering instruction is received. A conflict detection processing process includes steps A1 to A6.

Step A1: Obtain any feature vector in the reference feature vector set, and use the feature vector as a third feature vector.

Step A2: Obtain a similarity between the third feature vector and another reference feature vector in the reference feature vector set.

For step A2, refer to step 302. Details are not described again in this embodiment of this application.

Step A3: When the similarity between the third feature vector and each another reference feature vector in the reference feature vector set is not greater than the similarity threshold for storage, use any feature vector in the reference feature vector set other than the third feature vector as the third feature vector, repeatedly perform steps A1 to A7, and until all feature vectors in the reference feature vector set are traversed, stop the action.

Step A4: When a similarity between the third feature vector and a fourth feature vector in the reference feature vector set is greater than the similarity threshold for storage, and a label corresponding to the third feature vector is the same as a label corresponding to the fourth feature vector, use any feature vector in the reference feature vector set other than the third feature vector as the third feature vector, repeatedly perform steps A1 to A7, and until all feature vectors in the reference feature vector set are traversed, stop the action.

Step A5: When a similarity between the third feature vector and a fourth feature vector in the reference feature vector set is greater than the similarity threshold for storage, and a label corresponding to the third feature vector is different from a label corresponding to the fourth feature vector, send, to the management device, a time series corresponding to the third feature vector and a time series corresponding to the fourth feature vector, so that the management device presents the time series corresponding to the third feature vector and the time series corresponding to the fourth feature vector. Step A6 is performed.

For step A5, refer to step 3065. Details are not described in this embodiment of this application.

Step A6: Receive, from the management device, a same label that is of the time series corresponding to the third feature vector and the time series corresponding to the fourth feature vector. Step A7 is performed.

For step A6, refer to step 3066. Details are not described in this embodiment of this application.

Step A7: Update, based on the received label, the prestored label of the time series corresponding to the third feature vector and the prestored label of the time series corresponding to the fourth feature vector, use any feature vector in the reference feature vector set other than the third feature vector as the third feature vector, repeatedly perform steps A1 to A7, and until all feature vectors in the reference feature vector set are traversed, stop the action.

Conflict detection is performed inside the reference feature vector set, so that a label conflict can be avoided, and it can be ensured that a reference feature vector in the reference feature vector set performs an effective reference function. A feature vector of no reference value is deleted, to improve label determining accuracy.

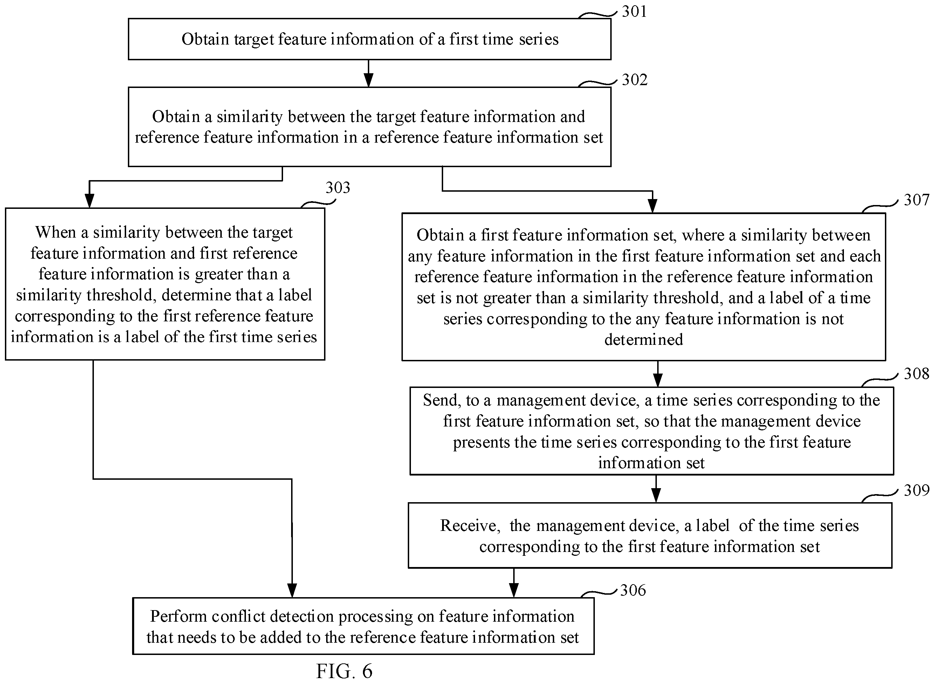

In step 304, when the similarity between the target feature vector and each reference feature vector in the reference feature vector set is not greater than the similarity threshold, the first time series is sent to the management device. To be specific, each time the analysis device obtains one time series whose similarity to each reference feature vector in the reference feature vector set is not greater than the similarity threshold, the analysis device sends the time series to the management device, to perform manual annotation. Such an annotation manner is an individual annotation manner. To be specific, one label is annotated in one process of interaction with the management device. In an actual implementation of this embodiment of this application, a manual annotation process may be further implemented in another manner, for example, in a cluster annotation manner. To be specific, a plurality of labels are annotated in one process of interaction with the management device. As shown in FIG. 6, when the cluster annotation manner is used, step 304 and step 305 may be replaced with steps 307 to 309.

Step 307: Obtain a first feature vector set, where a similarity between any feature vector in the first feature vector set and each reference feature vector in the reference feature vector set is not greater than the similarity threshold, and a label of a time series corresponding to the any feature vector is not determined.

In an optional example, a quantity of feature vectors in the first feature vector set is a specified quantity. For example, after repeatedly performing steps 301 to 303 for a plurality of times, the analysis device obtains a specified quantity of fifth feature vectors, and determines the specified quantity of fifth feature vectors as the first feature vector set. A similarity between the fifth feature vector and each reference feature vector in the reference feature vector set is not greater than the similarity threshold, and a label of a time series corresponding to the fifth feature vector is not determined. The fifth feature vector may include the target feature vector.

In another optional example, the first feature vector set is a periodically obtained set. For example, in a process of repeatedly performing steps 301 to 303 for a plurality of times, the analysis device obtains the fifth feature vector every specified duration to obtain the first feature vector set. The fifth feature vector is a feature vector whose similarity to each reference feature vector in the reference feature vector set is not greater than the similarity threshold within recent specified duration, and a label of a time series corresponding to the fifth feature vector is not determined. The fifth feature vector may include the target feature vector.

In still another optional example, the first feature vector set is a set obtained by the analysis device after receiving a collection instruction. For example, in a process of repeatedly performing steps 301 to 303 for a plurality of times, if receiving a collection instruction for instructing to collect the fifth feature vector, the analysis device obtains the fifth feature vector based on the collection instruction to obtain the first feature vector set. The fifth feature vector is a feature vector whose similarity to each reference feature vector in the reference feature vector set is not greater than the similarity threshold within historical duration (the historical duration may be specified duration, may be duration between a previous collection instruction and a current collection instruction, or may be duration specified in another manner), and a label of a time series corresponding to the fifth feature vector is not determined. The fifth feature vector may include the target feature vector.

Step 308: Send, to the management device, a time series corresponding to the first feature vector set, so that the management device presents the time series corresponding to the first feature vector set.

In a first optional manner, the analysis device sends, to the management device, the time series corresponding to the first feature vector set. After receiving the time series, the management device presents the time series corresponding to the first feature vector set, and the professional annotates a label of the time series corresponding to the first feature vector set.

For example, the management device may simultaneously display, in a same user interface, time series corresponding to a plurality of feature vectors in the first feature vector set, or may separately display, in a scrolling manner, time series corresponding to a plurality of feature vectors in the first feature vector set. This is not limited in this embodiment of this application.

Further, the analysis device may further send the first feature vector set to the management device. When presenting each time series, the management device may present a corresponding feature vector for reference by the professional, to assist the professional in performing label annotation, and improve label annotation accuracy.

In a second optional manner, before sending, to the management device, the time series corresponding to the first feature vector set in step 308, clustering processing may be further performed first on feature vectors in the first feature vector set, to obtain a category relationship between the feature vectors in the first feature vector set; and then in step 308, the category relationship and the time series corresponding to the first feature vector set are sent to the management device, so that the management device presents, based on the category relationship, the time series corresponding to the first feature vector set.

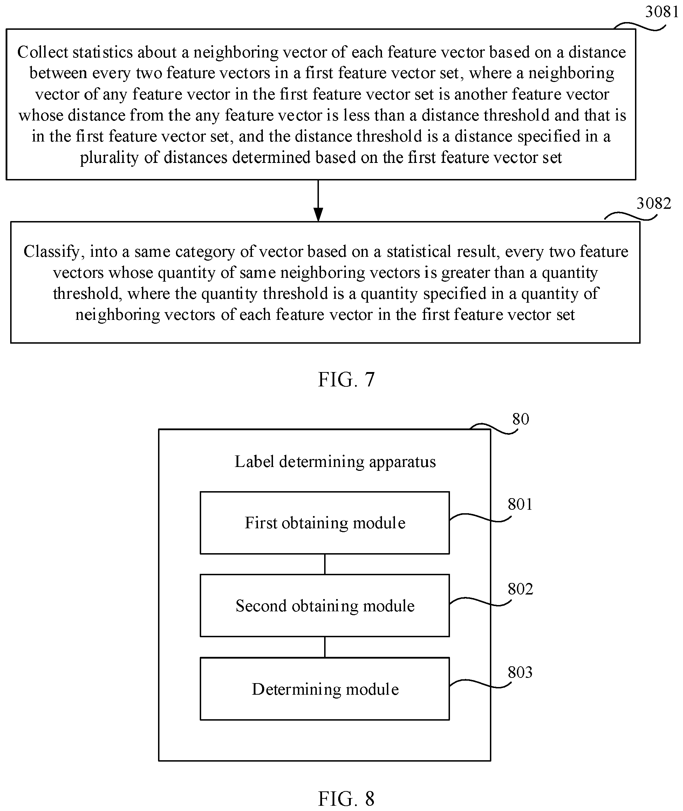

There may be a plurality of clustering processing manners. In an optional implementation, as shown in FIG. 7, a process of performing clustering processing on the feature vectors in the first feature vector set includes:

Step 3081: Collect statistics about a neighboring vector of each feature vector based on a distance between every two feature vectors in the first feature vector set, where a neighboring vector of any feature vector in the first feature vector set is another feature vector whose distance from the any feature vector is less than a distance threshold and that is in the first feature vector set, and the distance threshold is a distance specified in a plurality of distances determined based on the first feature vector set.

For example, step 3081 may include the following steps.

Step B1: The analysis device obtains the distance between the every two feature vectors in the first feature vector set.

It is assumed that the second reference feature vector and the third reference feature vector are any two reference feature vectors in the reference feature vector set, and a second feature is a same feature in a feature corresponding to the second reference feature vector and a feature corresponding to the third reference feature vector. In other words, the second feature is an intersection between the feature corresponding to the second reference feature vector and the feature corresponding to the third reference feature vector. A third feature subvector is a vector including data corresponding to the second feature in the second reference feature vector, and a fourth feature subvector is a vector including data corresponding to the second feature in the third reference feature vector. Therefore, a similarity between the second reference feature vector and the third reference feature vector is a distance between the third feature subvector and the fourth feature subvector. When the second reference feature vector and the third reference feature vector involve different categories of features and different quantities of features, refer to the first case in step 302. For a method for obtaining the distance between the third feature subvector and the fourth feature subvector, refer to steps 3021 to 3024. When the second reference feature vector and the third reference feature vector involve a same category of feature and a same quantity of features, a distance between the second reference feature vector and the third reference feature vector is directly obtained with reference to the second case in step 302.

Step B2: The analysis device determines the distance threshold from the plurality of distances determined based on the first feature vector set.

Optionally, the analysis device sorts the obtained distances, for example, in ascending order or in descending order. The distance threshold may be a distance in the sorted distances that is at a specified quantile or at a specified ranking. The specified quantile or the specified ranking is an experience value. For example, if the specified quantile is first 50% or first 90%, the distance threshold is a distance at a quantile of first 50% or first 90% in the sorted distances. "First" indicates a front-to-back sequence in a sorting sequence. For example, if the specified ranking is the fifth, the distance threshold is the fifth distance in the sorted distances. For example, it is assumed that the first feature vector set is $Z = (z_1, z_2, z_3, z_4)$, distances between the feature vector $z_1$ and each of $z_2$, $z_3$, and $z_4$ are respectively 10, 9, and 8, distances between the feature vector $z_2$ and each of $z_3$ and $z_4$ are respectively 11 and 6, a distance between $z_3$ and $z_4$ is 5, and the quantile is the first 50%. A distance sequence obtained after the analysis device sorts the obtained distances in descending order is 11, 10, 9, 8, 6, and 5, and the distance threshold is 9.

Step B3: Collect statistics about the neighboring vector of each feature vector based on the distance between every two feature vectors in the first feature vector set, where a neighboring vector of any feature vector in the first feature vector set is another feature vector whose distance from the any feature vector is less than the distance threshold and that is in the first feature vector set.

The example in step B2 is still used as an example. A neighboring vector of the feature vector $z_1$ is $z_4$, and the feature vector $z_1$ has one neighboring vector. A neighboring vector of the feature vector $z_2$ is $z_4$, and the feature vector $z_2$ has one neighboring vector. A neighboring vector of the feature vector $z_3$ is $z_4$, and the feature vector $z_3$ has one neighboring vector. Neighboring vectors of the feature vector $z_4$ are $z_1$, $z_2$, and $z_3$, and the feature vector $z_4$ has three neighboring vectors.

Step 3082: Classify, into a same category of feature vector based on a statistical result, every two feature vectors whose quantity of same neighboring vectors is greater than a quantity threshold, where the quantity threshold is a quantity specified in a quantity of neighboring vectors of each feature vector in the first feature vector set.

For example, step 3082 may include the following steps.

Step C1: The analysis device obtains the quantity of neighboring vectors of each feature vector in the first feature vector set.

The example in step B2 is still used as an example. The feature vectors $z_1$, $z_2$, $z_3$, and $z_4$ respectively have one neighboring vector, one neighboring vector, one neighboring vector, and three neighboring vectors.

Step C2: The analysis device determines the quantity threshold from the quantity of neighboring vectors of each feature vector in the first feature vector set.

Optionally, the analysis device sorts the obtained quantities, for example, in ascending order or in descending order. The quantity threshold may be a quantity in the sorted quantities that is at a specified quantile or at a specified ranking. The specified quantile or the specified ranking is an experience value. For example, the specified quantile is first 50% or first 60%.

For example, it is assumed that the specified quantile is first 50%, a quantity sequence obtained after the analysis device sorts the obtained quantities in descending order is 3, 1, 1, and 1. The quantity threshold is 1.

Step C3: Classify, into a same category of feature vector based on the statistical result, every two feature vectors whose quantity of same neighboring vectors is greater than the quantity threshold.

It is assumed that the quantity threshold is 1, and a quantity of same neighboring vectors of every two feature vectors in the feature vectors $z_1$, $z_2$, $z_3$, and $z_4$ is zero. Therefore, the feature vectors $z_1$, $z_2$, $z_3$, and $z_4$ each are classified into one category.

It is assumed that the quantity threshold is 1, same neighboring vectors of the feature vectors $z_1$ and $z_4$ are $z_2$ and $z_3$, same neighboring vectors of the feature vectors $z_2$ and $z_3$ are $z_1$ and $z_4$, the feature vectors $z_1$, $z_2$, and $z_3$ have no same neighboring vector, and the feature vectors $z_4$, $z_2$, and $z_3$ have no same neighboring vector. Therefore, the feature vectors $z_1$ and $z_4$ are classified into a same category of feature vector, and the feature vectors $z_2$ and $z_3$ are classified into a same category of feature vector.

In this embodiment of this application, the distance threshold and the quantity threshold are dynamically determined. The distance threshold is the distance specified in the plurality of distances determined based on the first feature vector set, reflects a distribution relationship of the plurality of distances corresponding to the first feature vector set, and is a value that changes with the first feature vector set. The quantity threshold is the quantity specified in the quantity of neighboring vectors of each feature vector in the first feature vector set, reflects a distribution relationship of the quantity of neighboring vectors of each feature vector in the first feature vector set, and is a value that changes with the first feature vector set. Therefore, the distance threshold and the quantity threshold are values that relatively changed, and a category relationship finally obtained through division based on at least one of the two thresholds is more accurate, better reflects a correlation between feature vectors, and improves adaptability of a clustering algorithm.

It should be noted that, in the second optional manner, the analysis device may further send the category relationship to the management device, and the management device may present, based on the category relationship, the time series corresponding to the first feature vector set. For example, the management device may display, on a same user page, a plurality of time series that belong to a same category, and display, on different user pages, a plurality of time series that belong to different categories. For another example, the management device may display, on different locations on a same user page, a plurality of time series that belong to different categories. For still another example, the management device correspondingly displays each time series and a category to which the time series belongs. The management device may present, based on the category relationship, the time series corresponding to the first feature vector set, so that the professional can refer to the category relationship during annotation, to assist the professional in performing label annotation. Based on this, the professional may annotate, with a same label, time series that belong to a same category, to improve annotation efficiency and increase label annotation accuracy.

In another optional implementation, clustering processing may be performed based on a shared nearest neighbor (shared nearest neighbor, SNN) algorithm. Relative to the clustering processing process provided in the foregoing optional implementation, a clustering threshold and a quantity threshold for performing clustering processing based on the SNN algorithm are preset.

In still another optional implementation, another clustering algorithm may alternatively be used to perform clustering processing. For example, a neural network model-based clustering algorithm is used to perform clustering processing. An algorithm used for clustering processing is not limited in this embodiment of this application.

For example, in Table 2, it is assumed that clustering processing is performed on a feature vector whose sample data ID is KPI_2, a time series corresponding to the feature vector is (z1, z2, ..., zn), the feature vector includes data of four features, and the data of the four features are respectively moving average, weighted mv, Tsd seasonal, and period yoy. The time series corresponding to the reference feature vector is (z1, z2, ..., zn), and a corresponding category identifier is "1".

Table 2

| Sample ID | Time sequence | Feature description 1 | Feature description 2 | Feature description 3 | Feature description 4 | Category description |
|---|---|---|---|---|---|---|
| KPI_2 | (z1, z2, ..., zn) | Moving_ average | Weighted_mv | Tsd_seasonal | Period yoy | 1 |

Step 309: Receive, from the management device, a label of the time series corresponding to the first feature vector set.

After the professional annotates the label of the time series, the management device receives the annotated label, and sends the label to the analysis device. The analysis device receives the label, and correspondingly stores the label and the corresponding time series.

In conclusion, according to the label determining method provided in this embodiment of this application, label migration is performed based on a similarity between feature vectors of time series, so that sample data can be automatically annotated, and label determining costs can be reduced. In addition, because similarity calculation is related to the feature vector of the time series, impact of interference information of the time series is avoided. For example, impact of interference information such as a sampling time period, an amplitude change, quadrant drift, and noise can be reduced. Label determining accuracy is improved. In particular, label migration can still be performed accurately for a high-dimensional time series. The label determining method provided in this embodiment of this application is applied to a scenario in which a large amount of sample data needs to be annotated, for example, a supervised learning algorithm or a semi-supervised learning algorithm, so that annotation costs can be effectively reduced, and modeling efficiency of a machine learning model can be improved.

In a conventional label determining method, label migration is performed based on a waveform similarity between time series, but label migration cannot be performed when waveforms of some time series are dissimilar.

However, according to the label determining method provided in this embodiment of this application, label migration is performed based on a similarity between feature vectors, a time series for which label migration is performed is not limited to time series with a similar waveform. Label migration can be performed provided that it is ensured that the time series are similar in some feature dimensions. It can be learned from this that this embodiment of this application may be applied to label migration to be performed for time series with different waveforms. Therefore, a label generalization scenario can be expanded, label migration flexibility and utilization can be improved, and modeling costs of the machine learning model can be reduced. Especially in the abnormality detection scenario, label migration between KPIs of some similar features can be implemented.

A sequence of steps of a method for implementing model training provided in this embodiment of this application may be properly adjusted, or a step may be correspondingly added or removed based on a case. For example, step 306 may be performed in parallel with another step. For another example, the analysis device has an input/output interface (for example, the user interface), and the analysis device presents the first time series through the input/output interface and receives the label of the first time series, without a need to perform the process of interaction with the management device in steps 304 and 305. Alternatively, the analysis device presents, through the input/output interface, the time series corresponding to the first feature vector and the time series corresponding to the second feature vector, and receives a same label of the time series corresponding to the first feature vector and the time series corresponding to the second feature vector, without a need to perform the process of interaction with the management device in steps 3065 and 3066. Alternatively, the analysis device presents, through the input/output interface, the time series corresponding to the third feature vector and the time series corresponding to the fourth feature vector, and receives a same label of the time series corresponding to the third feature vector and the time series corresponding to the fourth feature vector, without a need to perform the process of interaction with the management device in steps A5 and A6. Alternatively, the analysis device presents, through the input/output interface, the time series corresponding to the first feature vector set, and receives the label of the time series corresponding to the first feature vector set, without a need to perform the process of interaction with the management device in steps 308 and 309. Any variation readily figured out by a person skilled in the art within the technical scope disclosed in this application shall fall within the protection scope of this application, and therefore, details are not described herein.

An embodiment of this application provides a label determining apparatus 80. As shown in FIG. 8, the apparatus includes:

a first obtaining module 801, configured to obtain a target feature vector of a first time series, where a time series is a set of a group of data arranged in a time sequence;

a second obtaining module 802, configured to obtain a similarity between the target feature vector and a reference feature vector in a reference feature vector set, where the reference feature vector is a feature vector of a second time series with a determined label; and

a determining module 803, configured to: when a similarity between the target feature vector and a first reference feature vector is greater than a similarity threshold, determine that a label corresponding to the first reference feature vector is a label of the first time series, where the first reference feature vector is a reference feature vector in the reference feature vector set.

In conclusion, according to the label determining apparatus provided in this embodiment of this application, the second obtaining module performs label migration based on a similarity between feature vectors of time series, so that sample data can be automatically annotated, and label determining costs can be reduced. In addition, because similarity calculation is related to the feature vector of the time series, impact of interference information of the time series is avoided. For example, impact of interference information such as a sampling time period, an amplitude change, quadrant drift, and noise can be reduced. Label determining accuracy is improved. In particular, label migration can still be performed accurately for a high-dimensional time series. The label determining apparatus provided in this embodiment of this application is applied to a scenario in which a large amount of sample data needs to be annotated, for example, a supervised learning algorithm or a semi-supervised learning algorithm, so that annotation costs can be effectively reduced, and modeling efficiency of a machine learning model can be improved.

Optionally, the first time series is a time series of a network key performance indicator KPI.

Optionally, the reference feature vector includes data of one or more features, and the target feature vector includes data of one or more features; and

the similarity between the target feature vector and the first reference feature vector is a similarity between a first feature subvector and a second feature subvector, and the first feature subvector and the second feature subvector respectively consist of data in the target feature vector and data in the first reference feature vector that correspond to a same feature.

Optionally, the first feature subvector and the second feature subvector each are represented in a sequence form, data on a same location in the first feature subvector and the second feature subvector corresponds to a same category of feature, and the similarity between the first feature subvector and the second feature subvector is negatively correlated to a distance between the first feature subvector and the second feature subvector.

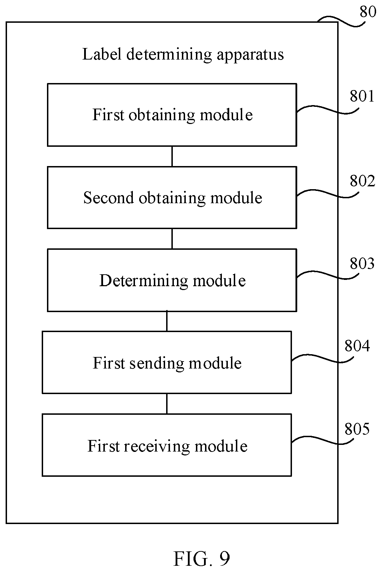

In an optional manner, as shown in FIG. 9, the apparatus 80 further includes:

a first sending module 804, configured to send the first time series to a management device when a similarity between the target feature vector and each reference feature vector in the reference feature vector set is not greater than the similarity threshold, so that the management device presents the first time series; and

a first receiving module 805, configured to receive a label that is of the first time series and that is sent by the management device.

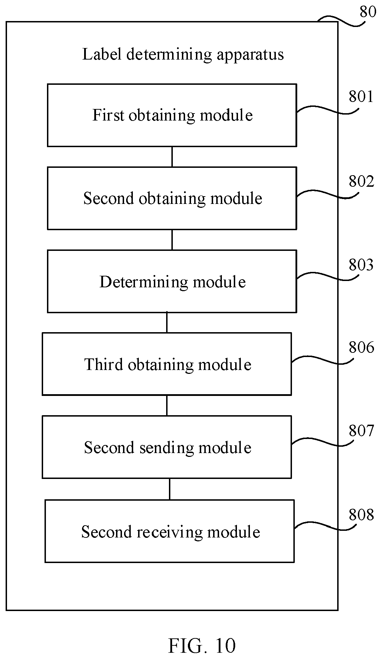

In another optional manner, as shown in FIG. 10, the apparatus 80 further includes:

a third obtaining module 806, configured to obtain a first feature vector set, where a similarity between any feature vector in the first feature vector set and each reference feature vector in the reference feature vector set is not greater than the similarity threshold, and a label of a time series corresponding to the any feature vector is not determined;

a second sending module 807, configured to send, to a management device, a time series corresponding to the first feature vector set, so that the management device presents the time series corresponding to the first feature vector set; and

a second receiving module 808, configured to receive a label that is of the time series corresponding to the first feature vector set and that is sent by the management device.

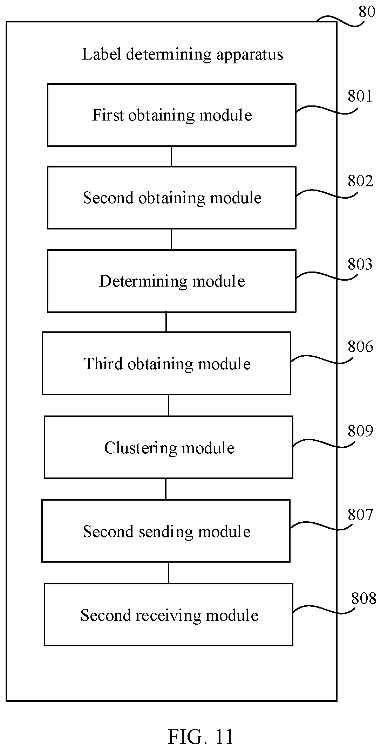

Optionally, as shown in FIG. 11, based on FIG. 10, the apparatus 80 further includes:

a clustering module 809, configured to perform clustering processing on feature vectors in the first feature vector set before the time series corresponding to the first feature vector set is sent to the management device, to obtain a category relationship between the feature vectors in the first feature vector set; and
the second sending module 807 is configured to:
send, to the management device, the category relationship and the time series corresponding to the first feature vector set, so that the management device presents, based on the category relationship, the time series corresponding to the first feature vector set.

Optionally, the clustering module 809 is configured to:

collect statistics about a neighboring vector of each feature vector based on a distance between every two feature vectors in the first feature vector set, where a neighboring vector of any feature vector in the first feature vector set is another feature vector whose distance from the any feature vector is less than a distance threshold and that is in the first feature vector set, and the distance threshold is a distance specified in a plurality of distances determined based on the first feature vector set; and

classify, into a same category of feature vector based on a statistical result, every two feature vectors whose quantity of same neighboring vectors is greater than a quantity threshold, where the quantity threshold is a quantity specified in a quantity of neighboring vectors of each feature vector in the first feature vector set.

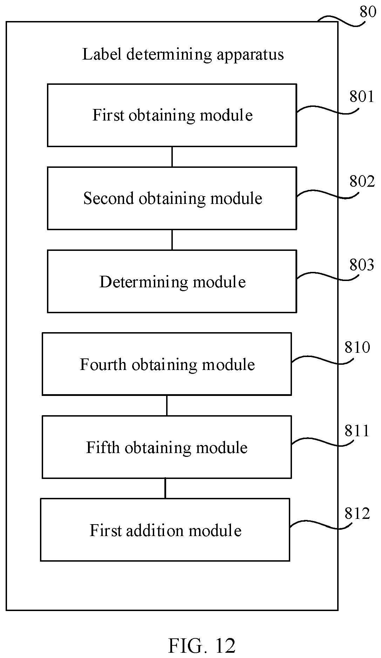

Optionally, as shown in FIG. 12, the apparatus 80 further includes:

a fourth obtaining module 810, configured to obtain a first feature vector of a third time series with a determined label;
a fifth obtaining module 811, configured to obtain a similarity between the first feature vector and a reference feature vector in the reference feature vector set; and
a first addition module 812, configured to: when a similarity between the first feature vector and each reference feature vector in the reference feature vector set is not greater than a similarity threshold for storage, add the first feature vector to the reference feature set by using the first feature vector as a reference feature vector.

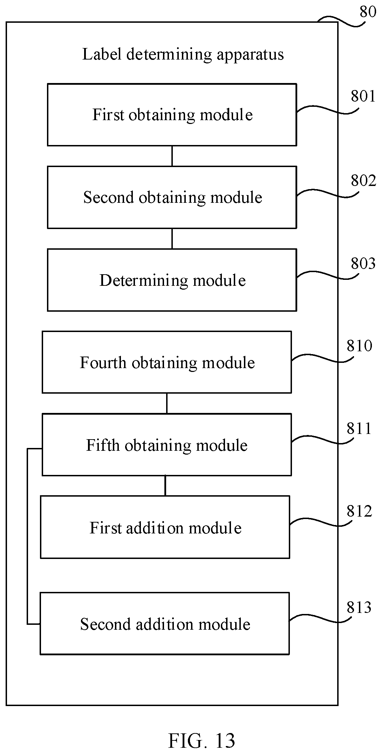

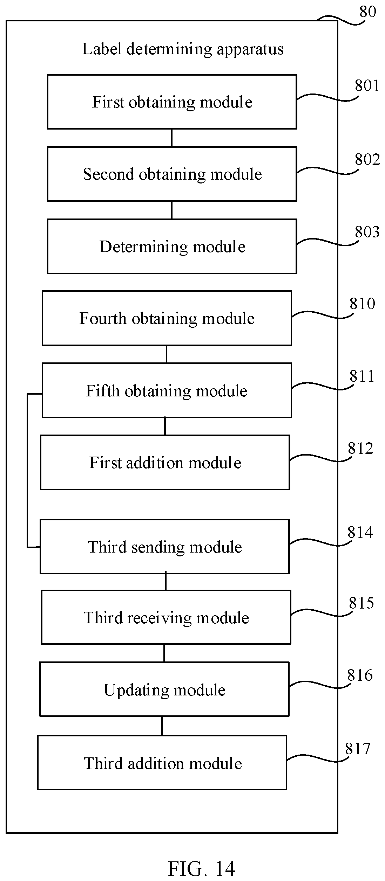

In an optional implementation, as shown in FIG. 13, based on FIG. 12, the apparatus 80 further includes:
a second addition module 813, configured to: when a similarity between the first feature vector and a second feature vector in the reference feature vector set is greater than the similarity threshold for storage, and a label corresponding to the first feature vector is the same as a label corresponding to the second feature vector, add the first feature vector to the reference feature set by using the first feature vector as a reference feature vector.
In another optional implementation, as shown in FIG. 14, based on FIG. 12, the apparatus 80 further includes:

a third sending module 814, configured to: when a similarity between the first feature vector and a second feature vector in the reference feature vector set is greater than the similarity threshold for storage, and a label corresponding to the first feature vector is different from a label corresponding to the second feature vector, send, to the management device, a time series corresponding to the first feature vector and a time series corresponding to the second feature vector, so that the management device presents the time series corresponding to the first feature vector and the time series corresponding to the second feature vector;
a third receiving module 815, configured to receive a same label that is of the time series corresponding to the first feature vector and the time series corresponding to the second feature vector and that is sent by the management device;
an updating module 816, configured to update, based on the received label, the prestored label of the time series corresponding to the first feature vector and the prestored label of the time series corresponding to the second feature vector; and
a third addition module 817, configured to add the first feature vector to the reference feature set by using the first feature vector as a reference feature vector.

Optionally, the target feature vector and the reference feature vector each include data of one or more of a statistical feature, a fitting feature, or a frequency domain feature.

Optionally, the apparatus is used in a network analyzer, and a label corresponding to the reference feature vector is an abnormality detection label.

In conclusion, according to the label determining apparatus provided in this embodiment of this application, the second obtaining module performs label migration based on a similarity between feature vectors of time series, so that sample data can be automatically annotated, and label determining costs can be reduced. In addition, because similarity calculation is related to the feature vector of the time series, impact of interference information of the time series is avoided. For example, impact of interference information such as a sampling time period, an amplitude change, quadrant drift, and noise can be reduced. Label determining accuracy is improved. In particular, label migration can still be performed accurately for a high-dimensional time series. The label determining apparatus provided in this embodiment of this application is applied to a scenario in which a large amount of sample data needs to be annotated, for example, a supervised learning algorithm or a semi-supervised learning algorithm, so that annotation costs can be effectively reduced, and modeling efficiency of a machine learning model can be improved.

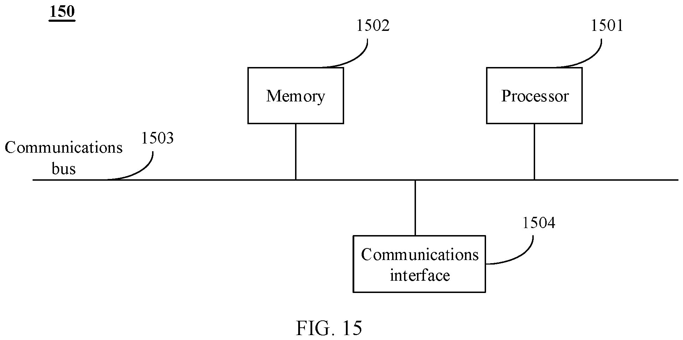

FIG. 15 is a block diagram of a label determining apparatus according to an embodiment of this application. The label determining apparatus may be an analysis device. As shown in FIG. 15, the analysis device 150 includes a processor 1501 and a memory 1502.

The memory 1501 is configured to store a computer program, and the computer program includes program instructions.

The processor 1502 is configured to invoke the computer program, to implement the label determining method provided in the embodiments of this application.

Optionally, the network device 150 further includes a communications bus 1503 and a communications interface 1504.

The processor 1501 includes one or more processing cores, and the processor 1501 executes various function applications and data processing by running the computer program.

The memory 1502 may be configured to store the computer program. Optionally, the memory may store an operating system and an application program unit required by at least one function. The operating system may be an operating system such as a real-time operating system (real time executive, RTX), LINUX, UNIX, WINDOWS, or OS X.

There may be a plurality of communications interfaces 1504. The communications interface 1504 is configured to communicate with another storage device or a network device. For example, in this embodiment of this application, the communications interface 1504 may be configured to receive sample data sent by a network device in a communications network.

The memory 1502 and the communications interface 1504 are separately connected to the processor 1501 through the communications bus 1503.

An embodiment of this application provides a computer storage medium. The computer storage medium stores instructions. When the instructions are executed by a processor, the label determining method provided in the embodiments of this application is implemented.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, all or some of the procedures or the functions according to the embodiments of the present invention are generated. The computer may be a general-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium, a semiconductor medium (for example, a solid-state drive), or the like.

The foregoing descriptions are only optional embodiments of this application, but are not intended to limit this application. Any modification, equivalent replacement, improvement, or the like made without departing from the spirit and principle of this application shall fall within the protection scope of this application.

**Claims**

1. A label determining method, wherein the method comprises:

   obtaining a target feature vector of a first time series;
   obtaining a similarity between the target feature vector and a reference feature vector in a reference feature vector set, wherein the reference feature vector is a feature vector of a second time series with a determined label; and
   when a similarity between the target feature vector and a first reference feature vector is greater than a similarity threshold, determining that a label corresponding to the first reference feature vector is a label of the first time series, wherein the first reference feature vector is a reference feature vector in the reference feature vector set.

2. The method according to claim 1, wherein the first time series is a time series of a network key performance indicator KPI.

3. The method according to claim 1 or 2, wherein the reference feature vector comprises data of one or more features, and the target feature vector comprises data of one or more features; and
   the similarity between the target feature vector and the first reference feature vector is a similarity between a first feature subvector and a second feature subvector, and the first feature subvector and the second feature subvector respectively consist of data in the target feature vector and data in the first reference feature vector that correspond to a same feature.

4. The method according to claim 3, wherein the similarity between the first feature subvector and the second feature subvector is negatively correlated to a distance between the first feature subvector and the second feature subvector.

5. The method according to any one of claims 1 to 4, wherein the method further comprises:

   sending the first time series to a management device when a similarity between the target feature vector and each reference feature vector in the reference feature vector set is not greater than the similarity threshold, so that the management device presents the first time series; and
   receiving, from the management device, a label of the first time series.

6. The method according to any one of claims 1 to 4, wherein the method further comprises:

   obtaining a first feature vector set, wherein a similarity between any feature vector in the first feature vector set and each reference feature vector in the reference feature vector set is not greater than the similarity threshold, and a label of a time series corresponding to the any feature vector is not determined;
   sending, to a management device, a time series corresponding to the first feature vector set, so that the management device presents the time series corresponding to the first feature vector set; and
   receiving, from the management device, a label of the time series corresponding to the first feature vector set.

7. The method according to claim 6, wherein before the sending, to a management device, a time series corresponding to the first feature vector set, the method further comprises:

   performing clustering processing on feature vectors in the first feature vector set, to obtain a category relationship between the feature vectors in the first feature vector set; and
   the sending, to a management device, a time series corresponding to the first feature vector set, so that the management device presents the time series corresponding to the first feature vector set comprises:
   sending, to the management device, the category relationship and the time series corresponding to the first feature vector set, so that the management device presents, based on the category relationship, the time series corresponding to the first feature vector set.

8. The method according to claim 7, wherein the performing clustering processing on feature vectors in the first feature vector set comprises:

   collecting statistics about a neighboring vector of each feature vector based on a distance between every two feature vectors in the first feature vector set, wherein a neighboring vector of any feature vector in the first feature vector set is another feature vector whose distance from the any feature vector is less than a distance threshold and that is in the first feature vector set, and the distance threshold is a distance specified in a plurality of distances determined based on the first feature vector set; and

classifying, into a same category of feature vector based on a statistical result, every two feature vectors whose quantity of same neighboring vectors is greater than a quantity threshold.

9. The method according to any one of claims 1 to 8, wherein the method further comprises:

obtaining a first feature vector of a third time series with a determined label;

obtaining a similarity between the first feature vector and a reference feature vector in the reference feature vector set; and

when a similarity between the first feature vector and each reference feature vector in the reference feature vector set is not greater than a similarity threshold for storage, adding the first feature vector to the reference feature set by using the first feature vector as a reference feature vector.

10. The method according to claim 9, wherein the method further comprises:
when a similarity between the first feature vector and a second feature vector in the reference feature vector set is greater than the similarity threshold for storage, and a label corresponding to the first feature vector is the same as a label corresponding to the second feature vector, adding the first feature vector to the reference feature set by using the first feature vector as a reference feature vector.

11. The method according to claim 9, wherein the method further comprises:

when a similarity between the first feature vector and a second feature vector in the reference feature vector set is greater than the similarity threshold for storage, and a label corresponding to the first feature vector is different from a label corresponding to the second feature vector, sending, to the management device, a time series corresponding to the first feature vector and a time series corresponding to the second feature vector, so that the management device presents the time series corresponding to the first feature vector and the time series corresponding to the second feature vector;

receiving, from the management device, a same label that is of the time series corresponding to the first feature vector and the time series corresponding to the second feature vector;

updating, based on the received label, the prestored label of the time series corresponding to the first feature vector and the prestored label of the time series corresponding to the second feature vector; and

adding the first feature vector to the reference feature set by using the first feature vector as a reference feature vector.

12. The method according to any one of claims 1 to 11, wherein the target feature vector and the reference feature vector each comprise data of one or more of a statistical feature, a fitting feature, or a frequency domain feature.

13. The method according to any one of claims 1 to 12, wherein the method is applied to a network analyzer, and a label corresponding to the reference feature vector is an abnormality detection label.

14. A label determining apparatus, wherein the apparatus comprises:

a first obtaining module, configured to obtain a target feature vector of a first time series, wherein a time series is a set of a group of data arranged in a time sequence;

a second obtaining module, configured to obtain a similarity between the target feature vector and a reference feature vector in a reference feature vector set, wherein the reference feature vector is a feature vector of a second time series with a determined label; and

a determining module, configured to determine that a label corresponding to a first reference feature vector is a label of the first time series when a similarity between the target feature vector and the first reference feature vector is greater than a similarity threshold , wherein the first reference feature vector is a reference feature vector in the reference feature vector set.

15. The apparatus according to claim 14, wherein the first time series is a time series of a network key performance indicator KPI.

16. The apparatus according to claim 14 or 15, wherein the reference feature vector comprises data of one or more features, and the target feature vector comprises data of one or more features; and

the similarity between the target feature vector and the first reference feature vector is a similarity between a first feature subvector and a second feature subvector, and the first feature subvector and the second feature subvector respectively consist of data in the target feature vector and data in the first reference feature vector that correspond to a same feature.

17. The apparatus according to claim 16, wherein the first feature subvector and the second feature subvector each are represented in a sequence form, data on a same location in the first feature subvector and the second feature subvector corresponds to a same category of feature, and the similarity between the first feature subvector and the second feature subvector is negatively correlated to a distance between the first feature subvector and the second feature subvector.

18. The apparatus according to any one of claims 14 to 17, wherein the apparatus further comprises:

a first sending module, configured to send the first time series to a management device when a similarity between the target feature vector and each reference feature vector in the reference feature vector set is not greater than the similarity threshold, so that the management device presents the first time series; and
a first receiving module, configured to receive a label that is of the first time series and that is sent by the management device.

19. The apparatus according to any one of claims 14 to 17, wherein the apparatus further comprises:

a third obtaining module, configured to obtain a first feature vector set, wherein a similarity between any feature vector in the first feature vector set and each reference feature vector in the reference feature vector set is not greater than the similarity threshold, and a label of a time series corresponding to the any feature vector is not determined;
a second sending module, configured to send, to a management device, a time series corresponding to the first feature vector set, so that the management device presents the time series corresponding to the first feature vector set; and
a second receiving module, configured to receive a label that is of the time series corresponding to the first feature vector set and that is sent by the management device.

20. The apparatus according to claim 19, wherein the apparatus further comprises:

a clustering module, configured to perform clustering processing on feature vectors in the first feature vector set before the time series corresponding to the first feature vector set is sent to the management device, to obtain a category relationship between the feature vectors in the first feature vector set; and
the second sending module is configured to:
send, to the management device, the category relationship and the time series corresponding to the first feature vector set, so that the management device presents, based on the category relationship, the time series corresponding to the first feature vector set.

21. The apparatus according to claim 20, wherein the clustering module is configured to:

collect statistics about a neighboring vector of each feature vector based on a distance between every two feature vectors in the first feature vector set, wherein a neighboring vector of any feature vector in the first feature vector set is another feature vector whose distance from the any feature vector is less than a distance threshold and that is in the first feature vector set, and the distance threshold is a distance specified in a plurality of distances determined based on the first feature vector set; and
classify, into a same category of feature vector based on a statistical result, every two feature vectors whose quantity of same neighboring vectors is greater than a quantity threshold, wherein the quantity threshold is a quantity specified in a quantity of neighboring vectors of each feature vector in the first feature vector set.

22. The apparatus according to any one of claims 14 to 21, wherein the apparatus further comprises:

a fourth obtaining module, configured to obtain a first feature vector of a third time series with a determined label;
a fifth obtaining module, configured to obtain a similarity between the first feature vector and a reference feature vector in the reference feature vector set; and
a first addition module, configured to add the first feature vector to the reference feature set by using the first feature vector as a reference feature vector when a similarity between the first feature vector and each reference feature vector in the reference feature vector set is not greater than a similarity threshold for storage.

23. The apparatus according to claim 22, wherein the apparatus further comprises:

a second addition module, configured to add the first feature vector to the reference feature set by using the first feature vector as a reference feature vector when a similarity between the first feature vector and a second feature vector in the reference feature vector set is greater than the similarity threshold for storage and a label corresponding to the first feature vector is the same as a label corresponding to the second feature vector.

24. The apparatus according to claim 22, wherein the apparatus further comprises:

a third sending module, configured to: when a similarity between the first feature vector and a second feature vector in the reference feature vector set is greater than the similarity threshold for storage, and a label corresponding to the first feature vector is different from a label corresponding to the second feature vector, send, to the management device, a time series corresponding to the first feature vector and a time series corresponding to the second feature vector, so that the management device presents the time series corresponding to the first feature vector and the time series corresponding to the second feature vector;
a third receiving module, configured to receive a same label that is of the time series corresponding to the first feature vector and the time series corresponding to the second feature vector and that is sent by the management device;
an updating module, configured to update, based on the received label, the prestored label of the time series corresponding to the first feature vector and the prestored label of the time series corresponding to the second feature vector; and
a third addition module, configured to add the first feature vector to the reference feature set by using the first feature vector as a reference feature vector.

25. The apparatus according to any one of claims 14 to 24, wherein the target feature vector and the reference feature vector each comprise data of one or more of a statistical feature, a fitting feature, or a frequency domain feature.

26. The apparatus according to any one of claims 14 to 25, wherein the apparatus is used in a network analyzer, and a label corresponding to the reference feature vector is an abnormality detection label.

27. A label determining apparatus, comprising a processor and a memory, wherein

the memory is configured to store a computer program, and the computer program comprises program instructions; and
the processor is configured to invoke the computer program to implement the label determining method according to any one of claims 1 to 13.

28. A computer storage medium, wherein the computer storage medium stores instructions; and when the instructions are executed by a processor, the label determining method according to any one of claims 1 to 13 is implemented.

FIG. 1

FIG. 2

```
                    ┌─────────────────────────────────────────┐ 301
                    │ Obtain a target feature vector of a      │
                    │ first time series                        │
                    └─────────────────────────────────────────┘
                                      │
                                      ▼
                    ┌─────────────────────────────────────────┐ 302
                    │ Obtain a similarity between the target   │
                    │ feature vector and a reference feature   │
                    │ vector in a reference feature vector set │
                    └─────────────────────────────────────────┘
```

When a similarity between the target feature vector and a first reference feature vector is greater than a similarity threshold, determine that a label corresponding to the first reference feature vector is a label of the first time series — 303

Send the first time series to a management device when a similarity between the target feature vector and each reference feature vector in the reference feature vector set is not greater than a similarity threshold, so that the management device presents the first time series — 304

Receive, from the management device, a label of the first time series — 305

Perform conflict detection processing on a feature vector that needs to be added to the reference feature vector set — 306

FIG. 3

3021

Select a same first feature from a feature corresponding to a target feature vector and a feature corresponding to a first reference feature vector

3022

Obtain data corresponding to the first feature in the target feature vector, to obtain a first feature subvector including the obtained data

3023

Obtain data corresponding to the first feature in the first reference feature vector, to obtain a second feature subvector including the obtained data

3024

Determine a similarity between the first feature subvector and the second feature subvector

FIG. 4

3061

Obtain a first feature vector of a third time series with a determined label

3062

Obtain a similarity between the first feature vector and a reference feature vector in a reference feature vector set

3063

When a similarity between the first feature vector and each reference feature vector in the reference feature vector set is not greater than a similarity threshold for storage, add the first feature vector to the reference feature set by using the first feature vector as a reference feature vector

3065

When a similarity between the first feature vector and a second feature vector in the reference feature vector set is greater than a similarity threshold for storage, and a label corresponding to the first feature vector is different from a label corresponding to the second feature vector, send, to a management device, a time series corresponding to the first feature vector and a time series corresponding to the second feature vector, so that the management device presents the time series corresponding to the first feature vector and the time series corresponding to the second feature vector

3064

When a similarity between the first feature vector and a second feature vector in the reference feature vector set is greater than a similarity threshold for storage, and a label corresponding to the first feature vector is the same as a label corresponding to the second feature vector, add the first feature vector to the reference feature set by using the first feature vector as a reference feature vector

TO
FIG. 5B

FIG. 5A

CONT.
FROM
FIG. 5A

3066

Receive, from the management device, a same label that is of the time series corresponding to the first feature vector and the time series corresponding to the second feature vector

3067

Update, based on the received label, the prestored label of the time series corresponding to the first feature vector and the prestored label of the time series corresponding to the second feature vector

3068

Add the first feature vector to the reference feature set by using the first feature vector as a reference feature vector

FIG. 5B

```
                    ┌─────────────────────────────────────────────────┐  ╭─ 301
                    │   Obtain target feature information of a first    │
                    │                 time series                       │
                    └─────────────────────────────────────────────────┘
                                         │
                                         ▼
                    ┌─────────────────────────────────────────────────┐  ╭─ 302
                    │  Obtain a similarity between the target feature   │
                    │ information and reference feature information in a │
                    │         reference feature information set          │
                    └─────────────────────────────────────────────────┘
```

| | |
|---|---|
| 303 — When a similarity between the target feature information and first reference feature information is greater than a similarity threshold, determine that a label corresponding to the first reference feature information is a label of the first time series | 307 — Obtain a first feature information set, where a similarity between any feature information in the first feature information set and each reference feature information in the reference feature information set is not greater than a similarity threshold, and a label of a time series corresponding to the any feature information is not determined |
| | 308 — Send, to a management device, a time series corresponding to the first feature information set, so that the management device presents the time series corresponding to the first feature information set |
| | 309 — Receive, the management device, a label of the time series corresponding to the first feature information set |

306 — Perform conflict detection processing on feature information that needs to be added to the reference feature information set

FIG. 6

3081

Collect statistics about a neighboring vector of each feature vector based on a distance between every two feature vectors in a first feature vector set, where a neighboring vector of any feature vector in the first feature vector set is another feature vector whose distance from the any feature vector is less than a distance threshold and that is in the first feature vector set, and the distance threshold is a distance specified in a plurality of distances determined based on the first feature vector set

3082

Classify, into a same category of vector based on a statistical result, every two feature vectors whose quantity of same neighboring vectors is greater than a quantity threshold, where the quantity threshold is a quantity specified in a quantity of neighboring vectors of each feature vector in the first feature vector set

FIG. 7

80

Label determining apparatus

First obtaining module                801

Second obtaining module               802

Determining module                    803

FIG. 8

Label determining apparatus — 80

First obtaining module — 801

Second obtaining module — 802

Determining module — 803

First sending module — 804

First receiving module — 805

FIG. 9

80

Label determining apparatus

First obtaining module — 801

Second obtaining module — 802

Determining module — 803

Third obtaining module — 806

Second sending module — 807

Second receiving module — 808

FIG. 10

80

## Label determining apparatus

First obtaining module — 801

Second obtaining module — 802

Determining module — 803

Third obtaining module — 806

Clustering module — 809

Second sending module — 807

Second receiving module — 808

FIG. 11

FIG. 12

80

Label determining apparatus

First obtaining module — 801

Second obtaining module — 802

Determining module — 803

Fourth obtaining module — 810

Fifth obtaining module — 811

First addition module — 812

Second addition module — 813

FIG. 13

80

Label determining apparatus

First obtaining module — 801

Second obtaining module — 802

Determining module — 803

Fourth obtaining module — 810

Fifth obtaining module — 811

First addition module — 812

Third sending module — 814

Third receiving module — 815

Updating module — 816

Third addition module — 817

FIG. 14

FIG. 15

**INTERNATIONAL SEARCH REPORT**

| International application No. |
|---|
| **PCT/CN2020/112878** |

**A.      CLASSIFICATION OF SUBJECT MATTER**

G06K 9/62(2006.01)i

According to International Patent Classification (IPC) or to both national classification and IPC

**B.      FIELDS SEARCHED**

Minimum documentation searched (classification system followed by classification symbols)

G06K9/-

Documentation searched other than minimum documentation to the extent that such documents are included in the fields searched

Electronic data base consulted during the international search (name of data base and, where practicable, search terms used)

CNABS; CNTXT; CNKI; TWABS; DWPI; VEN; USTXT; WOTXT; EPTXT: 时间序列, 时序, 网络关键绩效指标, 特征, 向量, 相似度, 距离, 阈值, 无监督, 半监督, time series, key performance indicator, KPI, feature, vector, similarity, distance, threshold, unsupervised, semi-supervised

**C.      DOCUMENTS CONSIDERED TO BE RELEVANT**

| Category* | Citation of document, with indication, where appropriate, of the relevant passages | Relevant to claim No. |
|---|---|---|
| Y | CN 107766426 A (BEIJING PERCENT INFORMATION TECHNOLOGY CO., LTD.) 06 March 2018 (2018-03-06)<br>description, paragraphs 40-155, and figures 1-4 | 1-28 |
| Y | CN 104794484 A (ZHEJIANG UNIVERSITY) 22 July 2015 (2015-07-22)<br>description, paragraphs 39-71, and figures 1-4 | 1-28 |
| A | CN 103337248 A (NANJING UNIVERSITY OF AERONAUTICS AND ASTRONAUTICS) 02 October 2013 (2013-10-02)<br>entire document | 1-28 |
| A | JP 2013192087 A (FUJITSU LTD.) 26 September 2013 (2013-09-26)<br>entire document | 1-28 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 November 2020** | **04 December 2020** |

| Name and mailing address of the ISA/CN | Authorized officer |
|---|---|
| **China National Intellectual Property Administration (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

| | | International application No.<br>**PCT/CN2020/112878** |
|---|---|---|

| Patent document<br>cited in search report | Publication date<br>(day/month/year) | Patent family member(s) | Publication date<br>(day/month/year) |
|---|---|---|---|
| CN 107766426 A | 06 March 2018 | CN 107766426 B | 22 May 2020 |
| CN 104794484 A | 22 July 2015 | CN 104794484 B | 06 March 2018 |
| CN 103337248 A | 02 October 2013 | CN 103337248 B | 29 July 2015 |
| JP 2013192087 A | 26 September 2013 | JP 5982900 B2 | 31 August 2016 |

Form PCT/ISA/210 (patent family annex) (January 2015)